(19) Europäisches Patentamt
European Patent Office
Office européen des brevets

(11) **EP 4 503 482 A1**

(12) **EUROPEAN PATENT APPLICATION**
published in accordance with Art. 153(4) EPC

(43) Date of publication:
05.02.2025 Bulletin 2025/06

(51) International Patent Classification (IPC):
*H04J 13/10* (2011.01)     *H04L 27/26* (2006.01)
*H04W 72/1268* (2023.01)

(21) Application number: 22933684.7

(22) Date of filing: 23.12.2022

(52) Cooperative Patent Classification (CPC):
H04J 13/10; H04L 27/26; H04W 72/1268

(86) International application number:
PCT/JP2022/047558

(87) International publication number:
WO 2023/181557 (28.09.2023 Gazette 2023/39)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 24.03.2022 JP 2022049011

(71) Applicant: Panasonic Intellectual Property
Corporation
of America
Torrance, CA 90504 (US)

(72) Inventors:
• YAMAMOTO, Tetsuya
Kadoma-shi, Osaka 571-0057 (JP)
• SHARIATMADARI, Hamidreza
63225 Langen (DE)
• SUZUKI, Hidetoshi
Kadoma-shi, Osaka 571-0057 (JP)

(74) Representative: Grünecker Patent- und
Rechtsanwälte
PartG mbB
Leopoldstraße 4
80802 München (DE)

(54) **TERMINAL, BASE STATION, AND COMMUNICATION METHOD**

(57) In an uplink transmission without using a reference signal, this terminal includes a control circuit that determines at least one series or at least one combination from a plurality of series or a plurality of combinations of series depending on a value of information bit, and a transmission circuit that multiplexes and transmits information bits of different priorities to an uplink resource using the at least one series or at least one combination.

<u>200</u>

CONTROLLER → TRANSMITTER

FIG. 7

**Description**

Technical Field

The present disclosure relates to a terminal, a base station, and a communication method.

Background Art

In recent years, a dramatic growth of Internet of Things (IoT) has been expected with the expansion and diversification of radio services as a background. The usage of mobile communication is expanding to all fields such as automobiles, houses, home electric appliances, or industrial equipment in addition to information terminals such as smartphones. In order to support the diversification of services, a substantial improvement in the performance and function of mobile communication systems has been required for various requirements such as an increase in the number of connected devices or low latency in addition to an increase in system capacity. The 5th generation mobile communication systems (5G) has features such as enhanced mobile broadband (eMBB), massive machine type communication (mMTC), and ultra reliable and low latency communication (URLLC), and can flexibly provide radio communication in response to a wide variety of needs.

The 3rd Generation Partnership Project (3GPP) as an international standardizing body has been specifying New Radio (NR) as one of 5G radio interfaces.

Citation List

Non-Patent Literature (hereinafter referred to as "NPL")

NPL 1
3GPP TS38.104 V15.16.0, "NR Base Station (BS) radio transmission and reception (Release 15)," December 2021.
NPL 2

RP-202928, "New WID on NR coverage enhancements," China Telecom, December 2020. NPL 3
3GPP TS38.211 V16.8.0, "NR Physical channels and modulation (Release 16)," December 2021.

NPL 4
3GPP TS38.212 V16.8.0, "NR Multiplexing and channel coding (Release 16)," December 2021.
NPL 5
3GPP TS38.213 V16.8.0, "NR Physical layer procedures for control (Release 16)," December 2021.
NPL 6
3GPP TS38.214 V16.8.0, "NR Physical layer procedures for data (Release 16)," December 2021.
NPL 7
R1-2007584, "Potential solutions for PUCCH coverage enhancement," Huawei, HiSilicon, October 26th - November 13th, 2020.
NPL 8
R1-2009315, "Potential coverage enhancement techniques for PUCCH," Qualcomm Incorporated, Huawei, HiSilicon, October 26th - November 13th, 2020.
NPL 9

R1-2008027, "Discussion on the PUCCH coverage enhancement," CMCC, August 2020. NPL 10
RP-201310, "Revised WID: Enhanced Industrial Internet of Things (IoT) and ultra-reliable and low latency communication (URLLC) support for NR," Nokia, Nokia Shanghai Bell, RAN#88e.

NPL 11
R1-2005201, "Report of RAN1#101-e meeting," ETSI MCC, November 2020.

Summary of Invention

Technical Problem

There is room for consideration on a method for improving the reception performance of a signal in the uplink, however.

One non-limiting and exemplary embodiment facilitates providing a terminal, a base station, and a communication method each capable of improving the reception performance of a signal in the uplink.

A terminal according to an exemplary embodiment of the present disclosure includes: control circuitry, which, in operation, determines at least one sequence or at least one combination from a plurality of sequences or a plurality of combinations of sequences according to a value of an information bit, in an uplink transmission without using a reference signal; and transmission circuitry, which, in operation, multiplexes information bits of different priorities in an uplink resource and transmits the information bits, by using the at least one sequence or the at least one combination, in the uplink transmission without using the reference signal.

It should be noted that general or specific embodiments may be implemented as a system, a method, an integrated circuit, a computer program, a storage medium, or any selective combination thereof.

According to an exemplary embodiment of the present disclosure, it is possible to improve the reception performance of a signal in the uplink.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

Brief Description of Drawings

FIG. 1 illustrates an exemplary feature of a Physical Uplink Control Channel (PUCCH) format;
FIG. 2 illustrates an exemplary PUCCH transmission;
FIG. 3 illustrates an exemplary PUCCH transmission;
FIG. 4 illustrates an exemplary PUCCH transmission;
FIG. 5 illustrates an exemplary operation of a PUCCH transmission;
FIG. 6 is a block diagram illustrating an exemplary configuration focused on part of a base station;
FIG. 7 is a block diagram illustrating an exemplary configuration focused on part of a terminal;
FIG. 8 is a block diagram illustrating an exemplary configuration of the base station;
FIG. 9 is a block diagram illustrating an exemplary configuration of the terminal;
FIG. 10 is a flowchart describing an exemplary operation of the terminal;
FIG. 11 illustrates an exemplary PUCCH transmission;
FIG. 12 illustrates an exemplary PUCCH transmission;
FIG. 13 illustrates an exemplary PUCCH transmission;
FIG. 14 is an exemplary architecture of a 3GPP NR system;
FIG. 15 schematically illustrates a functional split between NG-RAN and 5GC;
FIG. 16 is a sequence diagram of a Radio Resource Control (RRC) connection setup/reconfiguration procedure;
FIG. 17 schematically illustrates usage scenarios of enhanced Mobile BroadBand (eMBB), massive Machine Type Communications (mMTC), and Ultra Reliable and Low Latency Communications (URLLC); and
FIG. 18 is a block diagram illustrating an exemplary 5G system architecture for a non-roaming scenario.

Description of Embodiments

Hereinafter, embodiments of the present disclosure will be described in detail with reference to the accompanying drawings.

In NR, for example, in addition to a frequency band of 6 GHz or less, mainly within 700 MHz to 3.5 GHz band (for example, may be referred to as Frequency Range 1 (FR1)), which has been used for cellular communication, a millimeter-wave band such as 28 GHz or 39 GHz band capable of ensuring a wide band (for example, may be referred to as FR2) can be utilized (for example, see NPL 1). Further, for example, in FR1, a high frequency band is possibly used compared with the frequency band used in Long Term Evolution (LTE) or 3rd Generation mobile communication systems (3G) such as 3.5 GHz band.

The higher the frequency band is, the greater a radio wave propagation loss is, and thus, the received quality of radio waves is likely to deteriorate. Hence, in NR, for example, it is expected to ensure almost the same communication area (or coverage) as in the Radio Access Technology (RAT) such LTE or 3G, in other words, to ensure an appropriate communication quality when the high frequency band is used compared with LTE or 3G. In one example, in 3GPP Release 17 (e.g., referred to as "Rel. 17"), a method of improving the coverage in NR has been studied (e.g., see NPL 2).

In NR, a terminal (for example, also referred to as user equipment (UE)) transmits/receives data in accordance with, for example, resource allocation indicated by a Layer 1 control signal (for example, Downlink Control Information (DCI)) on a downlink control channel (for example, Physical Downlink Control Channel (PDCCH)) from a base station (for example, also referred to as gNB) or Radio Resource Control (RRC) that is Layer 3 (for example, see NPLs 3 to 7).

The terminal feeds back, for example, a response signal (for example, Acknowledgement/Negative Acknowledgement (ACK/NACK) or Hybrid Automatic Repeat ReQuest-ACK (HARQ-ACK)) indicating success or failure in decoding on a downlink data channel (for example, Physical Downlink Control Channel (PDSCH)), by using an uplink control channel (for example, Physical Uplink Control Channel (PUCCH)) (see, for example, NPL 5).

Further, the terminal may use a PUCCH to transmit, in addition to (or instead of) ACK/NACK, a scheduling request (SR) that requests radio resource allocation for uplink and channel state information (CSI) for downlink to the base station. The information transmitted with a PUCCH, such as an ACK/NACK, an SR, and CSI, is also referred to as uplink control information (for example, Uplink Control Information (UCI)).

For example, in a case where the terminal transmits an ACK/NACK for a PDSCH assigned by DCI, the terminal may transmit a PUCCH in accordance with resource allocation indicated by DCI from the base station. For example, the control information included in DCI may include information on a PUCCH resource or information on a timing, e.g. how many slots later a PUCCH is transmitted since the slot in which a PDSCH has been received (for example, K1 or PDSCH-to-PDSCH_feedback timing indication). Further, the control information included in DCI may include information on, for example, the number of ACK/NACK bits (e.g., Downlink Assignment Index (DAI)).

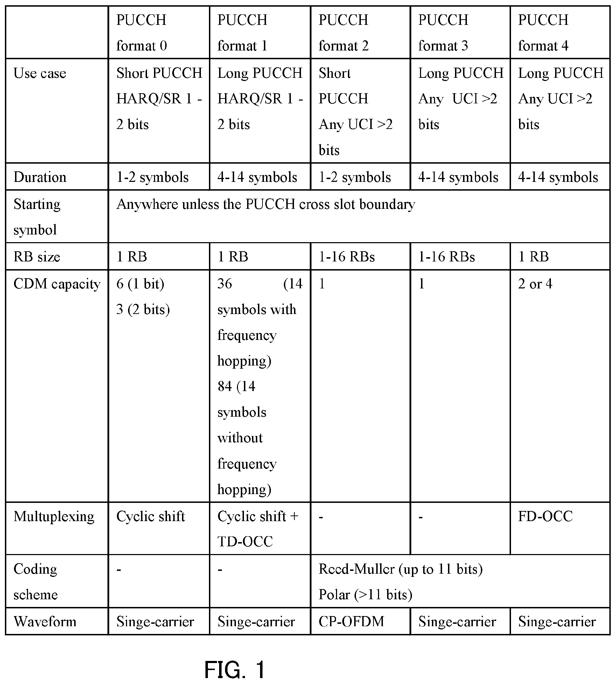

In NR, five PUCCH formats (e.g., PUCCH format 0 to 4) are defined (e.g., see NPL 3). FIG. 1 illustrates exemplary features of PUCCH formats 0 to 4.

As illustrated in FIG. 1, PUCCH format 0 is configured with 1 or 2 symbols, and the terminal is capable of transmitting UCI of up to 2 bits. PUCCH format 1 is configured with 4 to 14 symbols, and the terminal is capable of transmitting UCI of up to 2 bits. PUCCH format 2 is configured with 1 or 2 symbols, and the terminal is capable of transmitting UCI larger than 2 bits. PUCCH format 3 is configured with 4 to 14 symbols, and is capable of transmitting UCI larger than 2 bits. PUCCH format 4 is configured with 4 to 14 symbols, the terminal is capable of transmitting UCI larger than 2 bits, and further, it is possible to multiplex a plurality of terminals in the same time- and frequency resource (for example, a resource block (RB)) by using an orthogonal cover code (OCC).

For example, PUCCH formats 1, 2, 3, and 4 are each configured such that a reference signal (for example, a Demodulation Reference Signal (DMRS)) used in channel estimation for demodulation is placed in a PUCCH resource (for example, see NPL 3).

On the other hand, PUCCH format 0 may not use a DMRS (for example, does not require a DMRS). For example, in a case where PUCCH format 0 is used, the transmission side (for example, the terminal) maps cyclic shift sequences (for example, with a sequence length of 12) different from each other to one Orthogonal Frequency Division Multiplexing (OFDM) symbol and one resource block (for example, 12 subcarriers) according to information bits, and transmits the cyclic shift sequences. The reception side (for example, the base station) demodulates information bits by using the cyclic shift sequences, with a correlation processing-based maximum likelihood detection.

Here, a method for transmitting a PUCCH without using a DMRS (for example, also referred to as DMRS-less PUCCH) has been reported to be a technology capable of improving transmission quality and effective for coverage enhancement as compared with a PUCCH transmission method that uses a DMRS (see, for example, NPLs 7 to 9). For this reason, for example, a transmission of UCI larger than 2 bits, which is supported in an existing PUCCH format using a DMRS, is considered to be supported in a PUCCH transmission method without using a DMRS.

Hereinafter, examples of a PUCCH transmission method without using a DMRS will be described.

<Method 1>

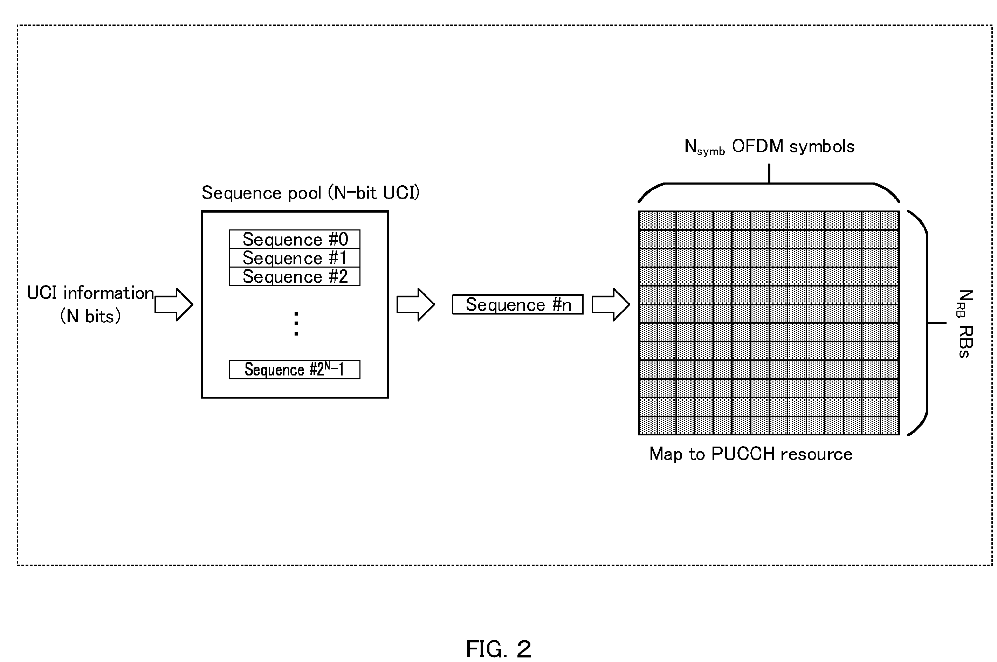

FIG. 2 illustrates a concept of a PUCCH transmission method in Method 1.

For example, NPL 7 discloses that sequence selection is applied as a PUCCH transmission method without using a DMRS, in which an N-bit UCI is transmitted. For example, as illustrated in FIG. 2, a sequence pool including $2^N$ sequences each of which is associated with each value of an N-bit UCI is prepared for the N-bit UCI. The terminal selects one sequence (for example, sequence #n) from the $2^N$ sequences, for example, according to the UCI bit value, and maps the selected sequence to a PUCCH resource and transmits the selected sequence. The PUCCH resource may be configured with, for example, $N_{symb}$ OFDM symbols and $N_{RB}$ resource blocks.

Hereinafter, this method will be referred to as "Method 1."

In Method 1, the operation of selecting one sequence with sequence length M from an N-bit UCI, where the sequence length of the sequence is M, can be regarded as a kind of precoding, for example. For example, the method described in NPL 7 or another method may be applied to the method for selecting one sequence with sequence length M from an N-bit UCI.

Further, in a case where the number of resource elements (REs) included in a PUCCH resource is larger than sequence length M, the terminal may repeat a sequence (for example, by repetition) and map the sequence to the PUCCH resource, or may extending a sequence (for example, by extension) and map the sequence to the PUCCH resource.

<Method 2>

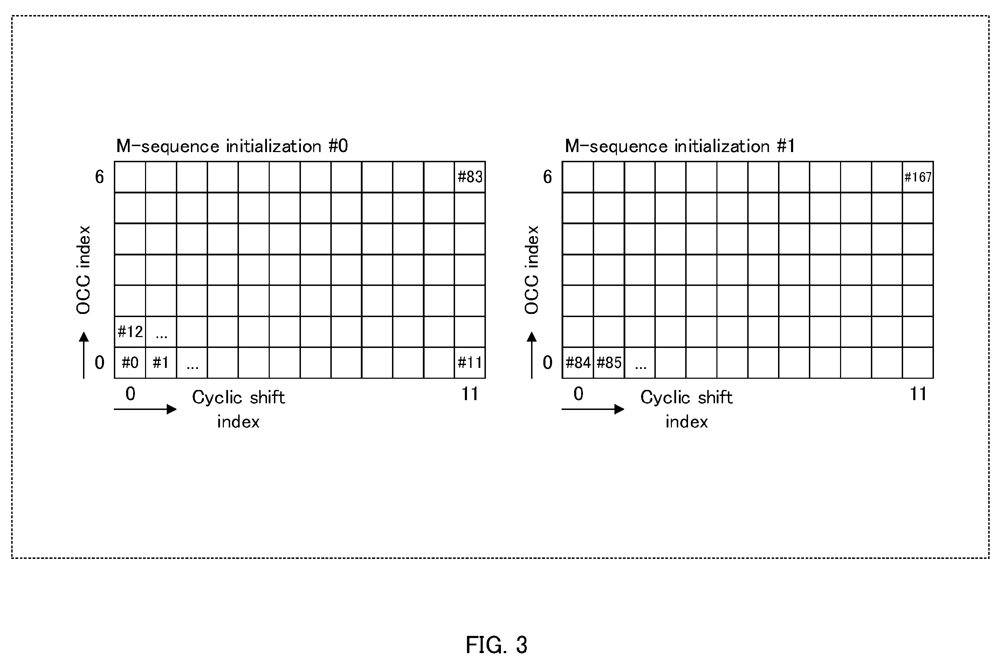

FIG. 3 illustrates a concept of a PUCCH transmission method in Method 2.

For example, in the same manner as in Method 1, NPL 8 discloses that sequence selection is applied as a PUCCH transmission method without using a DMRS, in which an N-bit UCI is transmitted. For example, in the same manner as in Method 1, a sequence pool including $2^N$ sequences each of which is associated with each value of an N-bit UCI is prepared for the N-bit UCI. The terminal selects one sequence from the $2^N$ sequences, for example, according to the UCI bit value, and maps the selected sequence to a PUCCH resource and transmits the selected sequence.

Further, NPL 8 discloses the use of a combination of an orthogonal sequence(s) and a non-orthogonal sequence(s) to generate a sequence included in a sequence pool.

For example, first, orthogonal sequences consisting of $No = N_{subcarrier} \times N_{symb}$ sequences are prepared. Here, $N_{subcarrier}$ indicates the number of subcarriers per one symbol assigned to a PUCCH resource, and $N_{symb}$ indicates the number of symbols assigned to the PUCCH resource. For example, it is possible to generate $N_{subcarrier}$ cyclic shift sequences for sequences with sequence length $N_{subcarrier}$. Further, by performing code spreading with an orthogonal cover code (OCC) according to number $N_{symb}$ of symbols, $No = N_{subcarrier} \times N_{symb}$ orthogonal sequences can be generated.

For example, in a case where number $N_O$ of orthogonal sequences is smaller than $2^N$, an orthogonal sequence(s) and a non-orthogonal sequence(s) may be combined such that $N_O \times N_{NO} \geq 2^N$ sequences are generated. For example, the method described in NPL 8 (e.g., a method for generating a plurality of non-orthogonal sequences by varying the initial values of M sequences) or another method may be applied to the method for generating a non-orthogonal sequence.

Hereinafter, this method will be referred to as "Method 2."

FIG. 3 illustrates sequences (for example, sequence numbers #0 to #167) that can be generated in the case of $N_{subcarrier} = 12$, $N_{symb} = 7$, and $N_{NO} = 2$ as an example.

<Method 3>

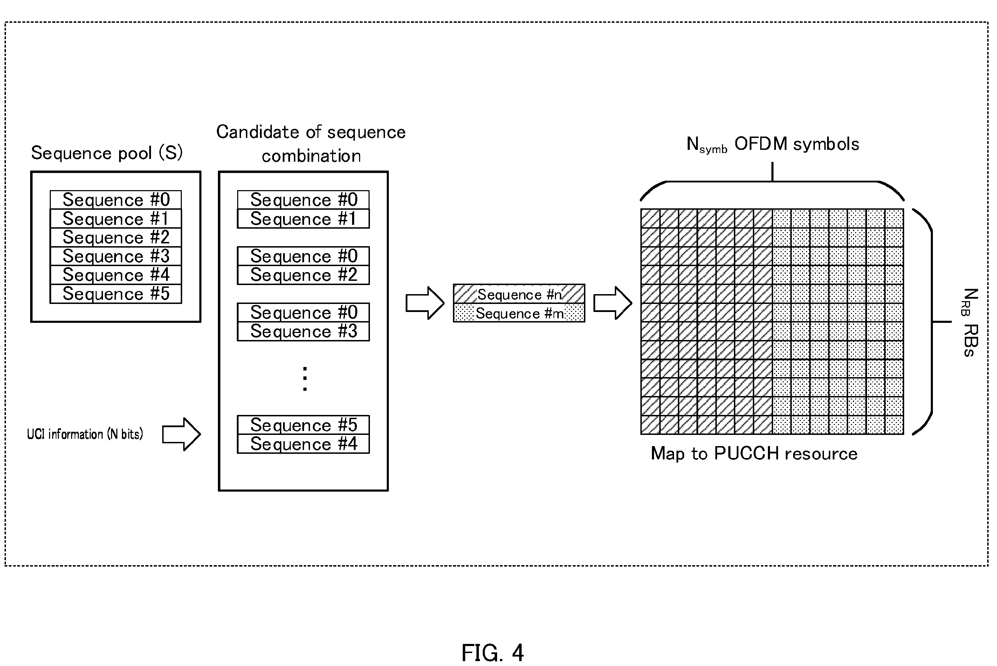

FIG. 4 illustrates a concept of a PUCCH transmission method in Method 3.

NPL 9 discloses, for example, a method for transmitting a UCI bit(s) with a combination of sequences.

For example, a sequence pool including S (six in the example of FIG. 4) sequences is prepared. For example, $2^N$ combinations of sequences, each of which is associated with each value of an N-bit UCI, may be prepared for the N-bit UCI.

For example, the terminal selects one combination (sequences #n and #m in the example of FIG. 4) from a plurality of combinations of sequences according to the UCI bit value, and maps the plurality of sequences included in the selected combination to a PUCCH resource and transmits the plurality of sequences.

Here, the number of combinations of sequences is $_SC_K$ when the number of sequences included in one combination of sequences that the terminal selects is K (two in the example in FIG. 4). Accordingly, number S of sequences included in a sequence pool may be prepared such that $S!/(K!(S - K)!) \geq 2^N$ is satisfied with respect to an N-bit UCI, and further, K sequences may be selected (and transmitted).

Alternatively, different information may be transmitted depending on the order in which sequences are transmitted or the order in which sequences are mapped. For example, in FIG. 4, a combination in the order of sequences #n and #m and a combination in the order of sequences #m and #n may be associated with UCI values that are different from each other. In this case, for example, number S of sequences included in a sequence pool may be prepared such that $S!/(S - K)! \geq 2^N$ is satisfied with respect to an N-bit UCI, and further, K sequences may be selected (and transmitted).

Then, the terminal maps the selected plurality of sequences to a PUCCH resource and transmits the selected plurality of sentences.

Hereinafter, this method will be referred to as "Method 3."

In the example illustrated in FIG. 4, S = 6 and K = 2. For example, in FIG. 4, when different information is transmitted depending on the order in which sequences are transmitted and the order in which sequences are mapped, $S!/(S - K)! = 1080$, and thus, UCI transmissions with N = 10 bits (the number of combinations of sequences necessary for transmission: $2^{10} = 1024$) are possible.

Methods 1 to 3 of PUCCH transmission have been described above.

In NR, it is assumed that the terminal supports services (for example, eMBB and URLLC) having a plurality of different requirement conditions, for example. For this reason, transmission resources for services having different requirement conditions may temporally overlap in an uplink transmission at the terminal. For example, at the terminal, uplink signals (for example, UCI) for services having a plurality of different requirement conditions may be generated at the same time. Further, PUCCH resources allocated for the terminal to transmit each UCI may temporally overlap.

In such a case, for example, in a case where the terminal has the capability of transmitting a plurality of channels simultaneously (for example, in the case of transmitting a plurality of PUCCHs simultaneously), the terminal can transmit uplink signals for services having different requirement conditions simultaneously without considering the influence of each other.

On the other hand, in a case where the terminal does not have the capability of transmitting a plurality of channels simultaneously, the terminal may perform, for example, an operation of transmitting a signal of any one of the plurality of channels and not transmitting a signal(s) of the remaining channel(s) (for example, an operation of dropping a transmission), or an operation of controlling the transmission power of the plurality of channels. At this time, a "priority/priorities" for determining the specific channel(s) whose signal(s) (for example, UCI) the terminal transmits may be determined for the plurality of channels.

In NR Rel. 16, for example, the priority of UCI, which is transmitted by the terminal, in the physical (PHY) layer can be configured (see, for example, NPL 5). For example, when the transmissions of uplink signals (e.g., UCI) temporally overlap with each other, the terminal compares information on each priority of UCI in the PHY layer and transmits UCI of a high priority, and drops the transmission of UCI of a low priority.

In NR Rel. 16, in a terminal operation in a case where a plurality of UCI transmissions with different priorities temporally overlap with each other, UCI of a high priority is transmitted and a transmission of UCI of a low priority is dropped.

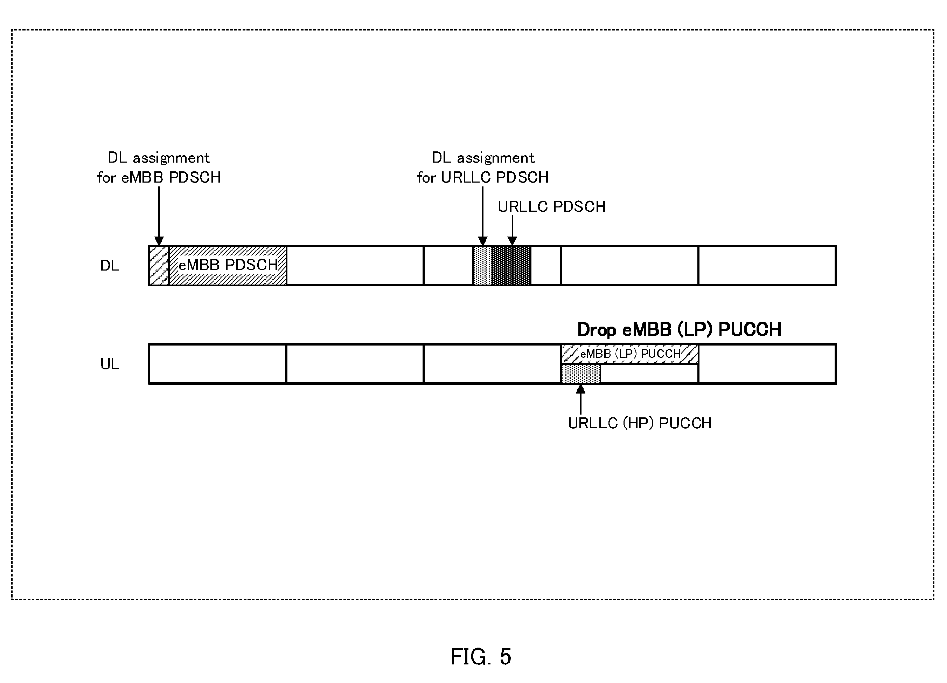

For example, a case where, as illustrated in FIG. 5, the transmission of a PUCCH (for example, HARQ-ACK) for a URLLC transmission configured as a high priority (for example, indicated as High Priority (HP)) and the transmission of a PUCCH (for example, HARQ-ACK) for an eMBB transmission configured as a low priority (for example, Low Priority (LP)) temporally overlap will be described.

In this case, the terminal may, for example, drop the transmission of the HARQ-ACK for the eMBB transmission configured as a low priority, and transmit the HARQ-ACK for the URLLC transmission configured as a high priority. In this case, the terminal can transmit the HARQ-ACK for the URLLC transmission configured as a high priority without being affected by another channel. On the other hand, the HARQ-ACK for the eMBB transmission configured as a low priority is not transmitted without depending on the PDSCH decoding result for the eMBB transmission, and thus, the base station does not determine whether the terminal could correctly decode the PDSCH for the eMBB transmission. For this reason, the base station retransmits the PDSCH for the eMBB transmission without depending on the decoding result of the terminal, and thus, the spectral efficiency of the downlink transmission may be degraded.

As a method for suppressing the degradation in the frequency efficiency of the downlink transmission described above, a method in which the terminal multiplexes UCI with different priorities in the same PUCCH resource and transmits the UCI is discussed in NR Rel. 17, for example (see, for example, NPL 10). For example, the scenario to be discussed in Rel. 17 includes multiplexing of a HARQ-ACK of a high priority and a HARQ-ACK of a low priority, multiplexing of an SR of a high priority and a HARQ-ACK of a low priority, and multiplexing of an SR of a high priority, a HARQ-ACK of a low priority, and a HARQ-ACK of a high priority (see, e.g., NPL 11).

For example, in a method in which information bits (for example, UCI bits) are transmitted by using a sequence or a combination of sequences without using a DMRS (for example, DMRS-less PUCCH), there is room for discussing a method for multiplexing and transmitting UCI with different priorities.

For example, when the terminal multiplexes UCI of a high priority and UCI of a low priority in the same PUCCH resource and transmits the UCI, a method in which the UCI of the high priority and the UCI of the low priority are regarded as one UCI bit sequence together and the information bits are transmitted by using the sequence or the combination of the sequences described above may be applied.

In this case, the resource allocation configuration may not be appropriately performed for each UCI of the different priorities. For example, more resources are likely to be allocated to UCI of a high priority and requiring a high reliability so as to satisfy the requirement condition. In a case where UCI of a high priority and UCI of a low priority are regarded as one UCI bit sequence together, it is inefficient from the viewpoint of resource utilization efficiency that the same resources as those for the UCI of the high priority are allocated to the UCI of the low priority.

Further, in a case where UCI of a high priority and UCI of a low priority are regarded as one UCI bit sequence, the number of sequences or the number of combinations of sequences prepared for transmission increases exponentially as the number of bits in the UCI bit string increases, and thus, the processing operation amount for demodulation at the base station (for example, correlation processing or the like) is likely to increase. For example, when an $N_{HP}$-bit UCI of a high priority and an $N_{LP}$-bit UCI of a low priority are multiplexed, the number of sequences or the number of combinations of sequences prepared for transmission becomes the following value.

[1]

$$2^{N_{HP}+N_{LP}}$$

In one non-limiting and exemplary embodiment, a method for approximately multiplexing UCI of different priorities in the same PUCCH resource and transmitting the UCI, in an uplink transmission (for example, a PUCCH transmission or a UCI transmission) without using a DMRS will be described.

For example, in a method for transmitting information bits (for example, UCI bits) by sequence selection or selection of a combination of sequences without using a DMRS (for example, DMRS-less PUCCH), the terminal may apply sequence selection or selection of a combination of sequences individually to UCI bit sequences with different priorities. Thus, for example, resources are appropriately allocated to each UCI of different priorities, and thus, the efficiency of PUCCH transmission can be improved from the viewpoint of resource utilization efficiency. Further, even in a case where UCI of different priorities is multiplexed in the same PUCCH resource and transmitted, an increase in the number of sequences or the number of combinations of sequences prepared for transmission can be suppressed.

Hereinafter, non-limiting embodiments of the present disclosure will be described.

[Overview of Communication System]

A communication system according to each embodiment of the present disclosure includes, for example, at least one base station and at least one terminal.

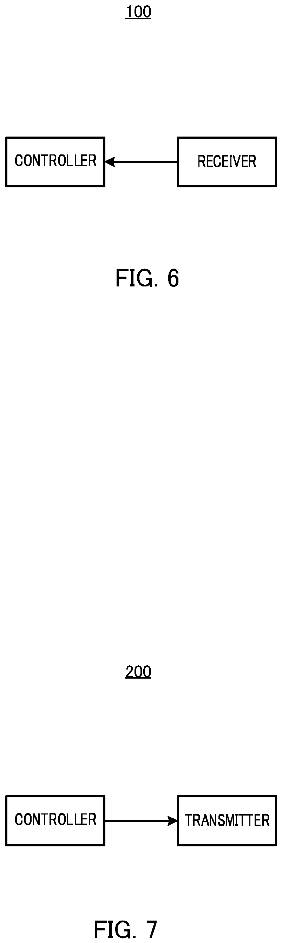

FIG. 6 is a block diagram illustrating an exemplary configuration focused on part of base station 100 according to an example of the present disclosure, and FIG. 7 is a block diagram illustrating an exemplary configuration focused on part of terminal 200 according to an example of the present disclosure.

In base station 100 illustrated in FIG. 6, a receiver (corresponding to, for example, reception circuitry) receives a signal (for example, a PUCCH signal). A controller (corresponding to, for example, control circuitry) identifies, based on association of the value of an information bit (for example, UCI) with a sequence or a combination of sequences, each value of information bits of different priorities included in a signal, in an uplink transmission without using a reference signal (for example, a DMRS).

In terminal 200 illustrated in FIG. 7, a controller (corresponding to, for example, control circuitry) determines at least one sequence or at least one combination from a plurality of sequences or a plurality of combinations of sequences according to the value of an information bit (such as a UCI bit) in an uplink transmission without using a reference signal (such as a DMRS). A transmitter (corresponding to, for example, transmission circuitry) multiplexes information bits of different priorities in an uplink resource and transmits the information bits, by using at least one sequence or at least one combination.

(Embodiment 1)

[Configuration of Base Station]

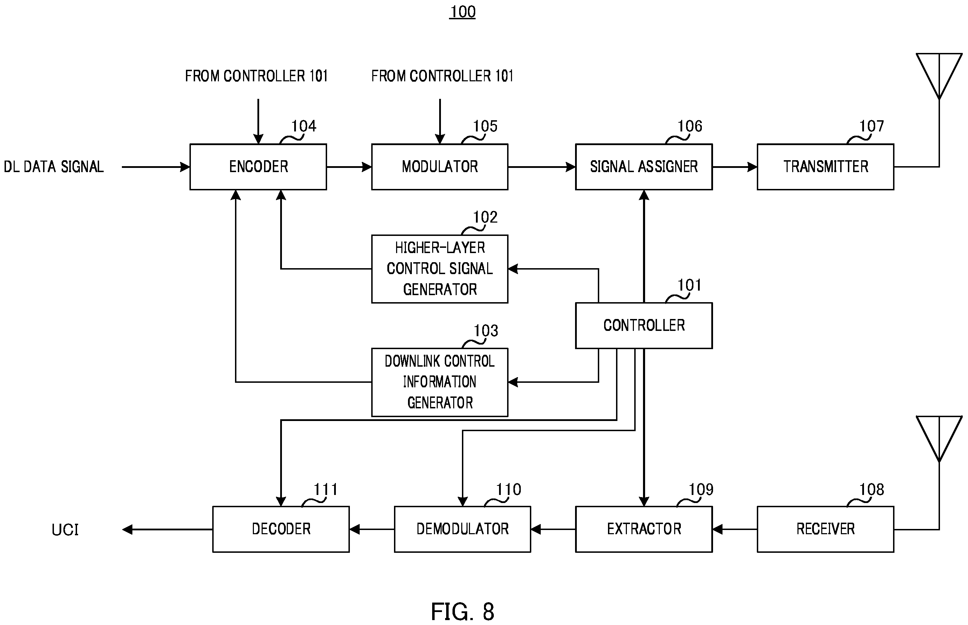

FIG. 8 is a block diagram illustrating an exemplary configuration of base station 100 according to Embodiment 1. In FIG. 8, base station 100 includes controller 101, higher-layer control signal generator 102, downlink control information generator 103, encoder 104, modulator 105, signal assigner 106, transmitter 107, receiver 108, extractor 109, demodulator 110, and decoder 111.

Note that, at least one of controller 101, higher-layer control signal generator 102, downlink control information generator 103, encoder 104, modulator 105, signal assigner 106, extractor 109, demodulator 110, and decoder 111 which are illustrated in FIG. 8 may be included in the controller illustrated in FIG. 6. Further, receiver 108 illustrated in FIG. 8 may be included in the receiver illustrated in FIG. 6.

Controller 101 determines, for example, at least one of information on a PUCCH transmission method and information on a PUCCH resource, and outputs the determined information to at least one of higher-layer control signal generator 102 and downlink control information generator 103. The information on the PUCCH transmission method may include, for example, information on a PUCCH format and information on whether to apply a PUCCH transmission method without using a DMRS. Further, the information on the PUCCH resource may include, for example, information on a PUCCH resource set and the number of Repetitions.

Further, controller 101 determines, for example, information on a downlink signal for transmitting a downlink data signal, a higher-layer control signal, or downlink control information (e.g., Modulation and Coding Scheme (MCS) and radio resource allocation), and outputs the determined information to encoder 104, modulator 105, and signal assigner 106. Further, controller 101 outputs information on a downlink signal (for example, a data signal or a higher-layer control signal) to downlink control information generator 103, for example.

Further, controller 101 determines, for example, information (e.g., PUCCH resource) on the transmission of an uplink control signal (e.g., PUCCH) in terminal 200. Controller 101 outputs the determined information on the uplink control signal to at least one of higher-layer control signal generator 102 and downlink control information generator 103, for example. Further, controller 101 determines, for example, information on a PUCCH resource and a sequence (or a candidate for a combination of sequences) to be used for PUCCH (for example, UCI) transmission, and outputs the determined information to extractor 109, demodulator 110, and decoder 111.

Higher-layer control signal generator 102 generates a higher-layer control signal bit string, for example, based on the information inputted from controller 101, and outputs the higher-layer control signal bit string to encoder 104.

Downlink control information generator 103 generates a downlink control information (for example, DCI) bit string, for example, based on the information inputted from controller 101, and outputs the generated DCI bit string to encoder 104. Downlink control information generator 103 may include, for example, the information on the PUCCH resource inputted from controller 101 in a PUCCH Resource Indicator (PRI) field in the DCI bit string. Note that, the control information may be transmitted to a plurality of terminals.

Encoder 104 encodes downlink data (e.g., a DL data signal), the bit string inputted from higher-layer control signal generator 102, or the DCI bit string inputted from downlink control information generator 103, for example, based on the information inputted from controller 101. Encoder 104 outputs the encoded bit string to modulator 105.

Modulator 105 modulates encoded bit string inputted from encoder 104, for example, based on the information inputted from controller 101, and outputs the modulated signal (for example, a symbol string) to signal assigner 106.

Signal assigner 106 maps, for example, based on the information inputted from controller 101 and indicating the radio resource, the symbol string (including, for example, a downlink data signal or a control signal) inputted from modulator 105 to the radio resource. Signal assigner 106 outputs a signal that has been mapped to a downlink to transmitter 107.

Transmitter 107 performs, for example, transmission waveform generation processing such as orthogonal frequency division multiplexing (OFDM), on a signal inputted, for example, from signal assigner 106. Further, for example, in the case of an OFDM transmission in which a cyclic prefix (CP) is added, transmitter 107 performs Inverse Fast Fourier Transform (IFFT) processing on the signal, and adds a CP to the signal after the IFFT. Further, transmitter 107 performs, for example, RF processing such as D/A conversion or up-conversion on the signal, and transmits a radio signal to terminal 200 via an antenna.

Receiver 108 performs RF processing such as down-conversion or A/D conversion on the uplink signal received from terminal 200 through, for example, an antenna. Further, in the case of an OFDM transmission, receiver 108 performs Fast Fourier Transform (FFT) processing on the received signal, for example, and outputs the obtained frequency domain signal to extractor 109.

Extractor 109 extracts, for example, based on the information inputted from controller 101, a radio resource portion from the received signal inputted from receiver 108, in which the uplink control signal (for example, PUCCH) is transmitted, and outputs the extracted radio resource portion to demodulator 110.

Demodulator 110 demodulates the uplink control signal (for example, PUCCH) inputted from extractor 109, for example, based on the information inputted from controller 101. For example, demodulator 110 may identify a sequence (or a combination of sequences) transmitted in the PUCCH. Demodulator 110 outputs, for example, the demodulation result to decoder 111.

Decoder 111 performs, for example, based on the information inputted from controller 101 and the demodulation result inputted from demodulator 110, error correction decoding of the uplink control signal (e.g., PUCCH) and obtains a decoded reception bit sequence (for example, UCI bit string). For example, decoder 111 may identify the number of UCI bits and the reception UCI bit string based on the sequence (or combination of sequences) identified in demodulator 110.

[Configuration of Terminal]

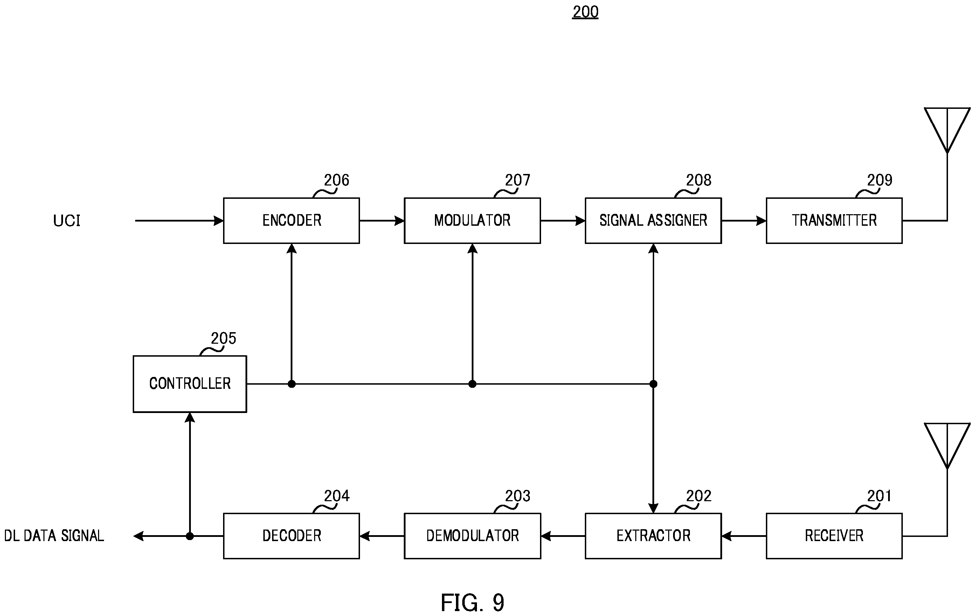

FIG. 9 is a block diagram illustrating an exemplary configuration of terminal 200 according to an exemplary embodiment of the present disclosure. For example, in FIG. 9, terminal 200 includes receiver 201, extractor 202, demodulator 203, decoder 204, controller 205, encoder 206, modulator 207, signal assigner 208, and transmitter 209.

Note that, at least one of extractor 202, demodulator 203, decoder 204, controller 205, encoder 206, modulator 207, and signal assigner 208 which are illustrated in FIG. 9 may be included in the controller illustrated in FIG. 7. Further, transmitter 209 illustrated in FIG. 9 may be included in the transmitter illustrated in FIG. 7.

Receiver 201 receives a downlink signal (for example, a downlink data signal or downlink control information) from base station 100 via an antenna, performs RF processing such as down-conversion or A/D conversion on the received radio signal, and obtains a received signal (baseband signal). Further, when receiver 201 receives an OFDM signal, receiver 201 performs FFT processing on the received signal and converts the received signal into that in the frequency domain. Receiver 201 outputs the received signal to extractor 202.

Extractor 202 extracts, for example, based on information on a radio resource in downlink control information, which is inputted from controller 205, a radio resource portion, which may include downlink control information, from the received signal inputted from receiver 201, and outputs the radio resource portion to demodulator 203. Further, extractor 202 extracts, based on information on a radio resource in a data signal, which is inputted from controller 205, a radio resource portion including downlink data, and outputs the radio resource portion to demodulator 203.

Demodulator 203 demodulates, for example, based on information inputted from controller 205, a signal inputted (for example, PDCCH or PDSCH) from extractor 202, and outputs the demodulation result to decoder 204.

Decoder 204 performs, for example, based on information inputted from controller 205, error correction decoding of the PDCCH or PDSCH by using the demodulation result inputted from demodulator 203, and obtains, for example, downlink reception data, a higher-layer control signal, or downlink control information. Decoder 204 outputs the higher-layer control signal and the downlink control information to controller 205, and outputs the downlink reception data. Further, decoder 204 may generate a response signal (for example, ACK/NACK) based on the decoding result of the downlink reception data.

Controller 205 determines, for example, a PUCCH resource based on a signal inputted from decoder 204 (for example, a higher-layer control signal or downlink control information). The higher-layer control signal may include information on a PUCCH transmission method and information on a PUCCH resource, for example. Further, the downlink control information may include information on a PUCCH resource in a PRI field, for example. Further, controller 205 may determine information on a sequence pool used for the transmission of a PUCCH without using a DMRS, for example. Controller 205 outputs the determined information to, for example, encoder 206, modulator 207, and signal assigner 208.

Encoder 206 encodes UCI, for example, based on the information inputted from controller 205. Encoder 206 outputs the encoded bit string to modulator 207. Note that, the encoding may not be applied to UCI depending on the PUCCH format.

Modulator 207 modulates, for example, based on the information inputted from controller 205, the encoded bit string inputted from encoder 206, and outputs the modulated signal (symbol string) to signal assigner 208. For example, modulator 207 may select a sequence (or a combination of sequences) to be used for PUCCH (UCI) transmission from the encoded bit string, and may output the selected sequence to signal assigner 208.

Signal assigner 208 maps a signal (for example, a sequence) inputted from modulator 207 to a radio resource, for example, based on the information inputted from controller 205. Signal assigner 208 outputs, for example, an uplink signal in which the signal is mapped, to transmitter 209.

Transmitter 209 generates a transmission signal waveform, such as OFDM, for the signal inputted from signal assigner 208. Further, in the case of an OFDM transmission using a CP, for example, transmitter 209 performs IFFT processing on the signal and adds a CP to the signal after the IFFT. Alternatively, in a case where transmitter 209 generates a single carrier waveform, a Discrete Fourier Transformer (DFT) may be added to a rear stage of modulator 207 or to a front stage of signal assigner 208, for example (not illustrated). Further, transmitter 209 performs, for example, RF processing such as D/A conversion and up-conversion on the transmission signal, and transmits the radio signal to base station 100 via an antenna.

[Operation Examples of Base Station 100 and Terminal 200]

Descriptions will be given of operation examples of base station 100 and terminal 200 that have the above configurations.

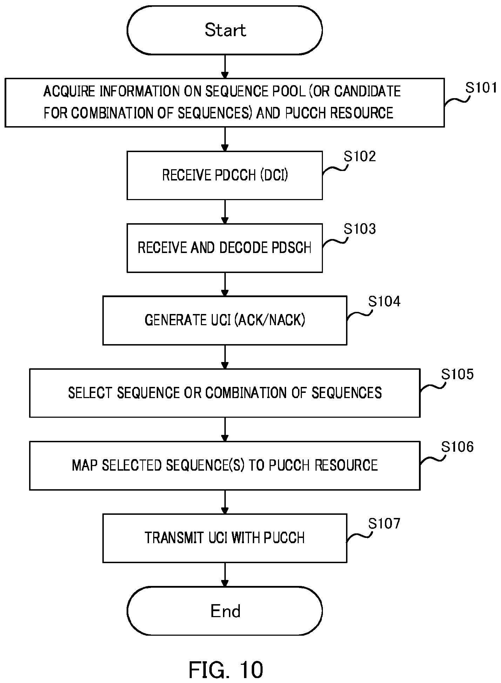

FIG. 10 is a flowchart describing an exemplary operation of terminal 200.

As illustrated in FIG. 10, terminal 200 acquires, for example, information on a sequence pool (or a candidate for a combination of sequences) to be used for PUCCH (UCI) transmission and information on a PUCCH resource (S101).

The information on the sequence pool (or the candidate for the combination of sequences) may be configured (or indicated) to terminal 200 by higher-layer signaling (for example, a Radio Resource Control (RRC) parameter) from base station 100, for example. Further, the information on the PUCCH resource may be configured, for example, by higher-layer signaling, such as RRC, from base station 100 to terminal 200, or may be configured by information included in DCI.

Terminal 200 receives a PDCCH (for example, including DCI) (S102).

Terminal 200 receives and decodes a PDSCH assigned by the DCI included in the received PDCCH, for example (S103).

Terminal 200 generates an ACK/NACK, for example, based on the reception success/failure (or decoding success/failure) of the PDSCH (S104).

Terminal 200 selects a sequence (or a combination of sequences) corresponding to the value of the generated ACK/NACK (e.g., the UCI bit value) from the sequence pool (or the candidate for the combination of sequences), for example (S105). For example, in a PUCCH transmission without using a DMRS, when transmissions of UCI bits with different priorities temporally overlap with each other, terminal 200 may select a sequence or a combination of sequences for each UCI bit sequence individually.

Terminal 200, for example, maps the selected sequence to a PUCCH resource (S106), and transmits the UCI with a PUCCH (S107). For example, in a case where the transmissions of UCI bits with different priorities temporally overlap with each other, terminal 200 may map a sequence or a combination of sequences, which is selected individually for each UCI bit sequence, to the PUCCH resource and transmit the sequence or the combination of sequences.

Note that, FIG. 10 illustrates an example in which an ACK/NACK is transmitted by UCI, but is not limited to this. For example, when an SR or CSI is transmitted by UCI, the reception of PDCCH (S102) and the reception and decoding of PDSCH (S103) at terminal 200 may be omitted.

Further, in FIG. 10, a case where information on a sequence (or a candidate for a combination of sequences) used for PUCCH transmission is indicated (or configured) to terminal 200 has been described, but the present disclosure is not limited thereto, and the information may be defined in a specification in advance. In this case, the reception processing of the information on the sequence pool may be omitted in the processing of S101 in FIG. 10.

Next, an exemplary transmission method of a PUCCH (for example, UCI) without using a DMRS will be described.

In the present embodiment, sequence selection or selection of a combination of sequences is applied, as an example, as a PUCCH transmission method without using a DMRS.

For example, when terminal 200 multiplexes UCI bits of different priorities in the same PUCCH resource and transmits the UCI bits, terminal 200 may apply sequence selection or selection of a combination of sequences to each of the UCI bits of different priorities individually. For example, terminal 200 may determine one sequence or one combination of sequences for each of the UCI bits of different priorities according to the values of the UCI bits of different priorities.

Terminal 200 maps the sequences individually selected for different pieces of UCI to a PUCCH resource and transmits the sequences, for example. For example, when terminal 200 multiplexes UCI bits of different priorities in a PUCCH resource and transmits the ICI bits, terminal 200 may map one sequence or one combination of sequences, which is individually determined for each of the UCI bits of different priorities, to the PUCCH resource and transmit the sequence or the combination of sequences.

For example, terminal 200 may map a sequence selected in accordance with UCI of a high priority to a resource element (RE) in a Frequency-first-time-second format, in a resource in a PUCCH to which the sequence is assigned.

Further, for example, terminal 200 may map a sequence selected in accordance with UCI of a low priority to a resource element, which is different from a resource element to which a sequence selected in accordance with UCI of a high priority is mapped, in a resource in a PUCCH to which the sequence is assigned.

Note that, the number of resource elements, to which a sequence selected in accordance with UCI of a high priority in a PUCCH is assigned, and the number of resource elements, to which a sequence selected in accordance with to UCI of a low priority is assigned, may be values different from each other.

According to the present embodiment, terminal 200 individually (or independently) applies sequence selection or selection of a combination of sequences to UCI of different priorities, and multiplexes the UCI of different priorities in the same PUCCH resource.

Thus, sequences individually selected in accordance with each of UCI of different priorities are mapped to resources (for example, resource elements or symbols) that are different from each other. For this reason, base station 100 can individually execute the processing operation of demodulation (for example, correlation processing or the like) on UCI of different priorities.

Further, according to the present embodiment, for example, terminal 200 can apply sequence selection or selection of a combination of sequences individually (independently) to UCI of different priorities. For this reason, the number of sequences or the number of combinations of sequences (for example, the number of candidates) to be used for the transmissions of a plurality of pieces of UCI is, for UCI of a high priority (such as $N_{HP}$ bit(s)),

$$[2]$$

$$2^{N_{HP}}$$

,

and is, for UCI of a low priority (for example, $N_{LP}$ bit(s)),

$$[3]$$

$$2^{N_{LP}}$$

Accordingly, for a plurality of pieces of UCI of different priorities, the number of sequences or the number of combinations of sequences to be prepared does not need to be

[4]

$$2^{N_{HP}+N_{LP}}$$

,

and the number of sequences to be prepared or the number of candidates for a combination of sequences to be prepared can be reduced. Further, since the reception side (for example, base station 100) does not need to perform correlation processing for a sequence pool or a candidate for a combination of sequences of

[5]

$$2^{N_{HP}+N_{LP}}$$

,

and thus, the effect of reducing the amount of operation processing is achieved.

Note that, sequence pools or candidates for a combination of sequences used for UCI of a high priority and UCI of a low priority may be the same or may be different.

Hereinafter, an example in which the PUCCH transmission method according to the present embodiment is applied to a method using sequence selection (for example, Method 1 or Method 2) will be described.

<Step 1>

In a case where terminal 200 transmits an $N_{HP}$-bit UCI of a high priority (for example, also referred to as HP UCI), a sequence pool including

[6]

$$2^{N_{HP}} \quad ( \quad or \quad 2^{N_{HP}} \text{ or more})$$

sequences is prepared.

Further, in a case where terminal 200 transmits an $N_{LP}$-bit UCI of a low priority (which is also referred to as LP UCI, for example), a sequence pool including

[7]

$$2^{N_{LP}} \quad ( \quad or \quad 2^{N_{LP}} \text{ or more})$$

sequences is prepared.

<Step 2>

Terminal 200 selects, for example, depending on the UCI bit value of a high priority to be generated, one sequence from a sequence pool including

[8]

$$2^{N_{HP}}$$

sequences.

Here, the sequence length of the sequence is denoted as M. Sequence length M may be, for example, a predetermined value in a specification, such as 12, 24, 48, or the like, or may be a semi-static parameter configured to terminal 200 by a higher layer such as an RRC.

Similarly, terminal 200 selects, for example, depending on the UCI bit value of a low priority to be generated, one sequence from a sequence pool including

$$[9]$$

$$2^{N_{LP}}$$

sequences.

Here, the sequence length of the sequence is denoted as M. Sequence length M may be, for example, a predetermined value in a specification, such as 12, 24, 48, or the like, or may be a semi-static parameter configured to terminal 200 by a higher layer such as an RRC.

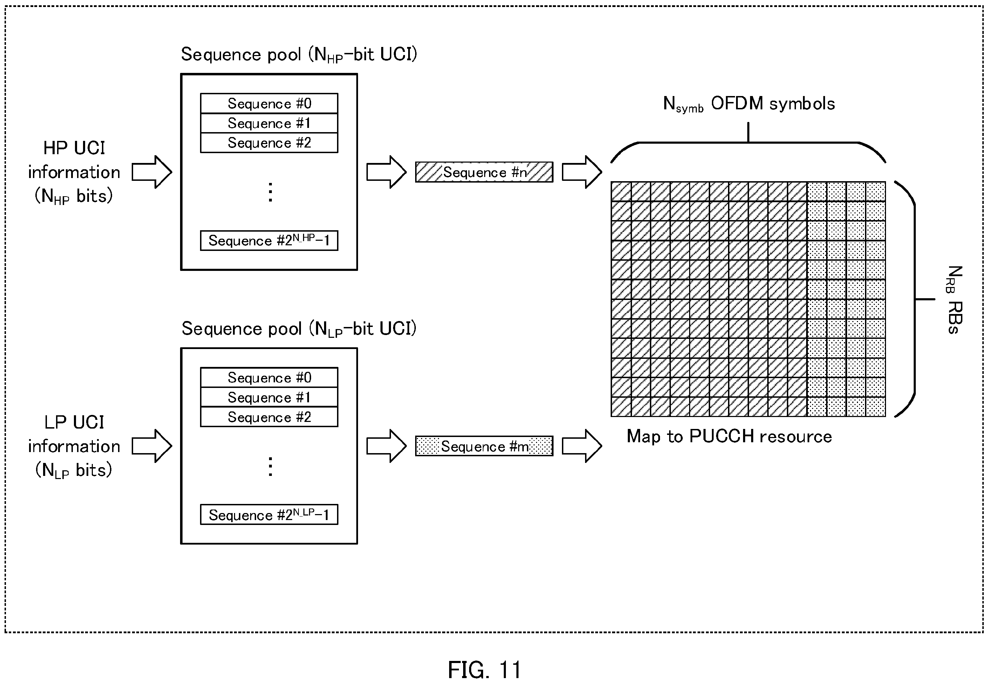

FIG. 11 illustrates an exemplary sequence selection. Note that, the associations of UCI bits with sequence numbers are not limited to those in the example in FIG. 11, but may be other associations.

In the example of FIG. 11, a sequence pool for UCI bits of a high priority including

$$[10]$$

$$2^{N_{HP}}$$

sequences each of which is associated with each value that an $N_{HP}$-bit UCI can take, and a sequence pool for UCI bits of a low priority including

$$[11]$$

$$2^{N_{LP}}$$

sequences each of which is associated with each value that an $N_{LP}$-bit UCI can take, are prepared.

In FIG. 11, terminal 200 may select one sequence (for example, sequence #n) from a sequence pool for UCI bits of a high priority according to the UCI bit value of a high priority, for example. Further, terminal 200 may select one sequence (for example, sequence #m) from a sequence pool for UCI bits of a low priority according to the UCI bit value of a low priority, for example.

<Step 3>

Terminal 200, for example, maps the selected sequence to a PUCCH resource and transmits the selected sequence. For example, when terminal 200 multiplexes UCI of a high priority and UCI of a low priority in the same PUCCH resource and transmits the UCI, terminal 200 may divide the PUCCH resource into two subresources. Then, terminal 200 may map one sequence, which is selected for each of the UCI of the priorities, to each of the subresources corresponding to the UCI of the priorities.

For example, the number of resource elements included in a subresource to which sequence #n corresponding to UCI of a high priority is mapped may be different from the number of resource elements included in a subresource to which sequence #m corresponding to UCI of a low priority is mapped, as illustrated in FIG. 11.

Further, in a case where the number of resource elements included in each subresource is larger than sequence length M, terminal 200 may repeat a sequence and map the sequence to the PUCCH resource, or may extend a sequence and map the sequence to the PUCCH resource. Further, terminal 200 may apply DFT-precoding before mapping a sequence to the PUCCH resource.

Base station 100 may demodulate a received PUCCH (UCI) and identify the UCI bit value based on the sequence identified by the demodulation. Further, in a case where a plurality of pieces of UCI is multiplexed in the same PUCCH resource (or the same timing), for example, base station 100 may demodulate the received PUCCH and identify each UCI value individually based on a sequence corresponding to each of the plurality of pieces of UCI. For example, in FIG. 11, base station 100 may identify the value of UCI of a high priority based on sequence #n identified by demodulating the PUCCH, and may identify the value of the UCI of a low priority based on sequence #m identified by demodulating the PUCCH.

An example in which the PUCCH transmission method according to the present embodiment is applied to a method using sequence selection has been described above.

Note that, in the sequence pool generation in <Step 1>, the following generation method (for example, <Step 1-1> and <Step 1-2> based on Method 2) may be applied.

<Step 1-1>

Terminal 200, for example, for UCI of a high priority, generates an orthogonal sequence pool including

[12]

$$N_O = N_{subcarrier} \times N_{symb}^{HP}$$

sequences. Here, $N_{subcarrier}$ represents the number of subcarriers per one symbol assigned to a PUCCH resource, and $N_{symb}^{HP}$ represents the number of symbols for mapping UCI of a high priority in the PUCCH resource. For a sequence of sequence length $N_{subcarrier}$, $N_{subcarrier}$ cyclic shift sequences can be generated, and further, by performing code spreading with an OCC according to number $N_{symb}^{HP}$ of symbols,

[13]

$$N_O = N_{subcarrier} \times N_{symb}^{HP}$$

orthogonal sequences can be generated.

Similarly, terminal 200, for example, for UCI of a low priority, generates an orthogonal sequence pool including

[14]

$$N_O = N_{subcarrier} \times N_{symb}^{LP}$$

sequences. Here, $N_{subcarrier}$ represents the number of subcarriers per one symbol assigned to a PUCCH resource, and $N_{symb}^{LP}$ represents the number of symbols for mapping UCI of a low priority in the PUCCH resource. For a sequence of sequence length $N_{subcarrier}$, $N_{subcarrier}$ cyclic shift sequences can be generated, and further, by performing code spreading with an OCC according to number $N_{symb}^{LP}$ of symbols,

[15]

$$N_O = N_{subcarrier} \times N_{symb}^{LP}$$

orthogonal sequences can be generated.

<Step 1-2>

For UCI of a high priority, when number $N_O$ of orthogonal sequences is smaller than

[16]

$$2^{N_{HP}}$$,

terminal 200 combines, for example, an orthogonal sequence(s) and a non-orthogonal sequence(s) to generate a sequence pool including

[17]

$$N_O \times N_{NO} \geq 2^{N_{HP}}$$

sequences.

Similarly, for UCI of a low priority, when number $N_O$ of orthogonal sequences is smaller than

[18]

$$2^{N_{LP}}$$

terminal 200 combines, for example, an orthogonal sequence(s) and a non-orthogonal sequence(s) to generate a sequence pool including

[19]

$$N_O \times N_{NO} \geq 2^{N_{LP}}$$

sequences.

Note that, as the method for generating a non-orthogonal sequence, for example, the method described in NPL 8 (for example, the method for generating a plurality of non-orthogonal sequences by varying the initial value of an M sequence) or another method may be applied.

Next, an example in which the PUCCH transmission method according to the present embodiment is applied to a method using selection of a combination of sequences (for example, Method 3) will be described.

<Step 1>

For UCI of a high priority, a sequence pool including $S_{HP}$ sequences is prepared.

Here, the sequence length of the sequence is denoted as M. Sequence length M may be, for example, a predetermined value in a specification, such as 12, 24, 48, or the like, or may be a semi-static parameter configured to terminal 200 by a higher layer such as an RRC. Alternatively, the sequence may be generated, for example, by a combination of a cyclic shift and an OCC in the same manner as in Step 1-1 and Step 1-2 described above.

Similarly, a sequence pool including $S_{LP}$ sequences is prepared for UCI of a low priority.

Here, the sequence length of the sequence is denoted as M. Sequence length M may be, for example, a predetermined value in a specification, such as 12, 24, 48, or the like, or may be a semi-static parameter configured to terminal 200 by a higher layer such as an RRC. Alternatively, the sequence may be generated, for example, by a combination of a cyclic shift and an OCC in the same manner as in Step 1-1 and Step 1-2 described above.

<Step 2>

Terminal 200 selects $K_{HP}$ sequences (for example, a combination of sequences) from $S_{HP}$ sequences according to the value of a UCI bit of a high priority, for example.

Here, the values of $S_{HP}$ and $K_{HP}$ may be values satisfying the following.

[20]

$$\frac{S_{HP}!}{K_{HP}!(S_{HP}-K_{HP})!} \geq 2^{N_{HP}}$$

Further, when different information is transmitted depending on the order in which sequences are transmitted or the order in which sequences are mapped, the values of $S_{HP}$ and $K_{HP}$ may be values satisfying the following.

[21]

$$\frac{S_{HP}!}{(S_{HP}-K_{HP})!} \geq 2^{N_{HP}}$$

Similarly, terminal 200 selects $K_{LP}$ sequences (e.g., a combination of sequences) from $S_{LP}$ sequences according to the value of a UCI bit of a low priority, for example.

Here, the values of $S_{LP}$ and $K_{LP}$ may be values satisfying the following.

$$[22]$$

$$\frac{S_{LP}!}{K_{LP}!(S_{LP}-K_{LP})!} \geq 2^{N_{LP}}$$

Further, when different information is transmitted depending on the order in which sequences are transmitted or the order in which sequences are mapped, the values of $S_{LP}$ and $K_{LP}$ may be values satisfying the following.

$$[23]$$

$$\frac{S_{LP}!}{(S_{LP}-K_{LP})!} \geq 2^{N_{LP}}$$

Note that, the values of $S_{HP}$, $S_{HP}$, $K_{HP}$, and $K_{LP}$ may be values determined in advance in a specification, or may be semi-static parameters configured to terminal 200 by a higher layer such as an RRC.

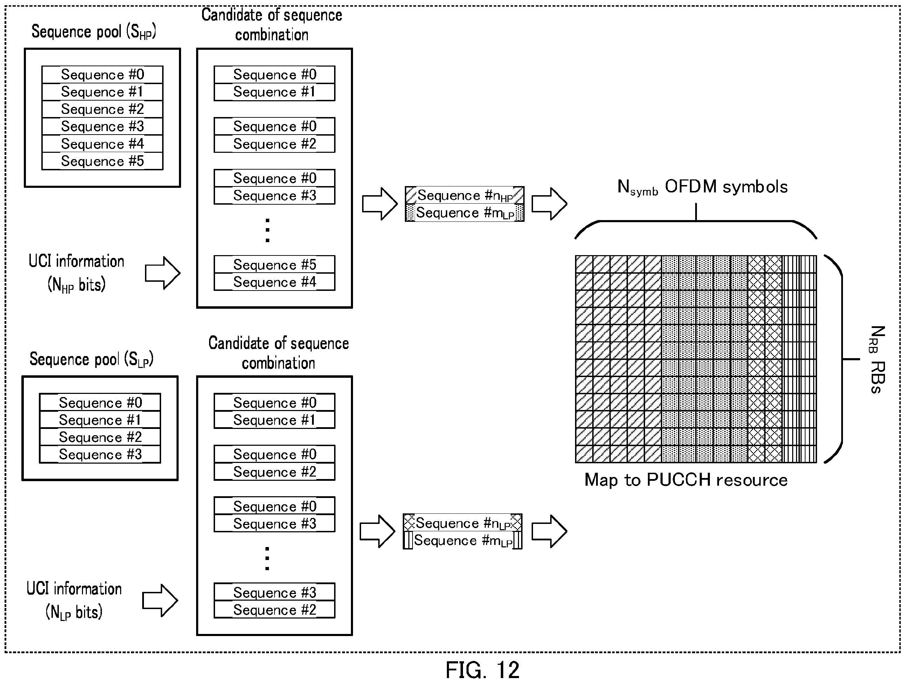

FIG. 12 illustrates an exemplary selection of a combination of sequences. Note that, the associations of UCI bits with combinations of sequences are not limited to those in the example in FIG. 12, and may be other associations.

In the example of FIG. 12, a sequence pool including $S_{HP} = 6$ sequences (for example, sequences #0 to #5) for UCI of a high priority is prepared. Further, number $K_{HP} = 2$ of sequences is included in one combination of sequences, and each of

$$[24]$$

$$2^{N_{HP}}$$

combinations of sequences may be associated with each value that a $N_{HP}$-bit UCI can take.

Further, in the example of FIG. 12, a sequence pool including $S_{LP} = 4$ sequences (for example, sequences #0 to #3) is prepared for UCI of a low priority. Further, number $K_{LP} = 2$ of sequences is included in one combination of sequences, and each of

$$[25]$$

$$2^{N_{LP}}$$

combinations of sequences may be associated with each value that a $N_{LP}$-bit UCI can take.

In FIG. 12, terminal 200 may select, for example, one combination of sequences (for example, a combination of sequences #$n_{HP}$ and #$m_{HP}$) from candidates for a combination of sequences for UCI bits of a high priority according to the UCI bit value of a high priority. Further, terminal 200 may select, for example, one combination of sequences (for example, a combination of sequences #$n_{LP}$ and #$m_{LP}$) from candidates for a combination of sequences for UCI bits of a low priority according to the UCI bit value of a low priority.

<Step 3>

Terminal 200 maps the sequences included in the selected combinations of sequences to a PUCCH resource and transmits the sequences, for example. For example, when terminal 200 multiplexes UCI of a high priority and UCI of a low priority in the same PUCCH resource and transmits the UCI, terminal 200 may divide the PUCCH resource into two subresources. Then, terminal 200 may map the sequences included in one combination of sequences, which is selected for each of the UCI of the priorities, to each of the subresources corresponding to the UCI of the priorities.

For example, the number of resource elements included in a subresource to which sequence #n corresponding to UCI of a high priority is mapped may be different from the number of resource elements included in a subresource to which sequence #m corresponding to UCI of a low priority is mapped, as illustrated in FIG. 12.

Further, in a case where terminal 200 selects $K_{HP}$ sequences for UCI of a high priority and transmits $K_{HP}$ sequences, for example, the subresource for UCI of a high priority in a PUCCH resource may be divided into $K_{HP}$ resources, and $K_{HP}$ sequences may be respectively mapped to the resources.

Similarly, for example, in a case where terminal 200 selects and transmits $K_{LP}$ sequences for UCI of a low priority and transmits the $K_{LP}$ sequences, the subresource for UCI of a low priority in a PUCCH resource may be divided into $K_{LP}$ resources, and $K_{LP}$ sequences may be respectively mapped to the resources.

Note that, for example, in a case of sequence length M, when the number of resource elements included in a divided resource is larger than M, terminal 200 may repeat a sequence and map the sequence to a subresource, or may extend a sequence and map the sequence to a subresource. Further, terminal 200 may apply DFT-precoding, for example, before mapping a sequence to a PUCCH resource.

Base station 100 may demodulate a received PUCCH (UCI) and identify the UCI bit value based on a combination of sequences identified by the demodulation. Further, for example, in a case where a plurality of pieces of UCI is multiplexed in the same PUCCH resource (or the same timing), base station 100 may demodulate a received PUCCH and identify the value of each UCI individually based on a combination of sequences corresponding to the respective plurality of pieces of UCI. For example, in FIG. 12, base station 100 may identify the value of UCI of a high priority based on a combination of sequences $\#n_{HP}$ and $\#m_{HP}$, which is identified by demodulating the PUCCH, and may identify the value of UCI of a low priority based on a combination of sequence $\#n_{LP}$ and sequence $\#m_{LP}$, which is identified by demodulating the PUCCH.

Exemplary operations of base station 100 and terminal 200 have been described above.

As described above, in the present embodiment, in a PUCCH transmission without using a DMRS, terminal 200 determines at least one sequence or at least one combination from a plurality of sequences or a plurality of combinations of sequences according to a UCI bit value, and multiplexes information bits of different priorities in an uplink resource and transmits the information bits, by using the determined at least one sequence or the determined at least one combination. Further, base station 100 receives a PUCCH signal, and identifies, based on an association of a UCI bit value with a sequence or a combination of sequences in a PUCCH transmission without a DMRS, each value of UCI bits of different priorities included in the PUCCH signal.

In the present embodiment, sequence selection or selection of a combination of sequences is applied individually to UCI of a high priority and UCI of a low priority, for example.

Thus, when UCI of different priorities is multiplexed in the same PUCCH resource and transmitted, it is possible to perform resource allocation in accordance with each UCI configuration (for example, a service, a requirement condition, and the like), and thus, it is possible to improve the efficiency of resource utilization.

Further, the number of sequences or the number of combinations of sequences, which is prepared for UCI transmission, is individually configured according to the number of bits of each UCI. For this reason, even in a case where UCI of different priorities is multiplexed in the same PUCCH resource and transmitted, it is possible to prevent the number of sequences or the number of combinations of sequences, which is prepared for transmission, from increasing (for example, from increasing exponentially), and thus, for example, it is possible to prevent an increase in the processing operation amount of demodulation (for example, correlation processing or the like) at base station 100.

Thus, according to the present embodiment, it is possible to improve the reception performance of a signal in a PUCCH transmission without using a DMRS.

(Embodiment 2)

Configurations of base station 100 and terminal 200 according to the present embodiment may be the same as the configurations in Embodiment 1.

In the present embodiment, as an example, a method (for example, Method 3) for transmitting a UCI bit by a combination of sequences is applied as a PUCCH transmission method without a DMRS.

For example, when the terminal transmits an $N_{HP}$-bit UCI of a high priority, a sequence pool including

[26]

$$2^{N_{HP}}$$

subsets is prepared. Each subset may include, for example, $S_{LP}$ sequences.

In the present embodiment, each of a plurality of subsets included in a sequence pool may be associated with a candidate value that an $N_{HP}$-bit UCI of a high priority can take. Further, in the present embodiment, each of a plurality of candidates for a combination of sequences based on $S_{LP}$ sequences included in each subset may be associated with a candidate value that an $N_{LP}$-bit UCI of a high priority can take. Note that, the combination of sequences may be, for example, a combination of $K_{LP}$ sequences among $S_{LP}$ sequences.

Terminal 200 may determine one combination of sequences from a plurality of combinations of sequences included in a sequence pool according to, for example, a UCI bit of a high priority and a UCI bit of a low priority. For example, terminal 200 selects one subset from a plurality of subsets included in a sequence pool according to the UCI bit value of a high priority. Further, terminal 200 selects one combination of sequences (for example, $K_{LP}$ sequences) from $S_{LP}$ sequences included in a selected subset according to the UCI bit value of a low priority, for example.

Then, terminal 200 maps a plurality of sequences included in the selected combination of sequences to a PUCCH resource and transmits the plurality of sequences.

Here, the number of sequences to be selected from $S_{LP}$ sequences included in a subset will be referred to as $K_{LP}$. In this case, the number of combinations is

$$[27]$$

$$_{S_{LP}}C_{K_{LP}}$$

For example, number $S_{LP}$ of sequences included in a subset and number $K_{LP}$ of sequences to be selected may be values satisfying the following.

$$[28]$$

$$\frac{S_{LP}!}{K_{LP}!(S_{LP}-K_{LP})!} \geq 2^{N_{LP}}$$

Further, in a case where different information is transmitted depending on the order in which sequences are transmitted or the order in which sequences are mapped, for example, number $S_{LP}$ of sequences included in a subset and number $K_{LP}$ of sequences to be selected may be values satisfying the following.

$$[29]$$

$$\frac{S_{LP}!}{(S_{LP}-K_{LP})!} \geq 2^{N_{LP}}$$

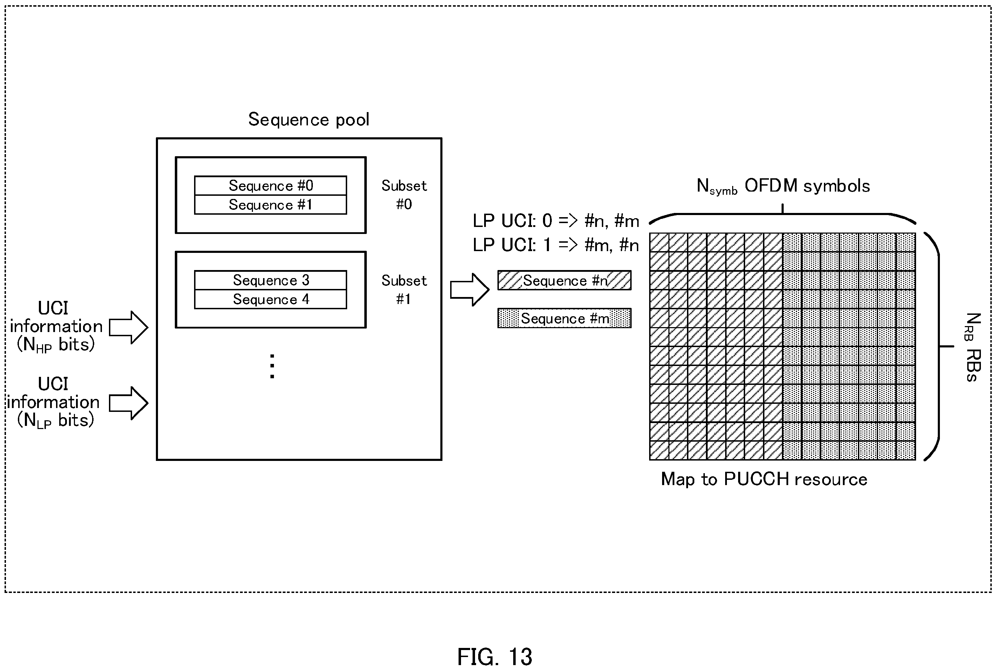

FIG. 13 illustrates an exemplary sequence pool, subsets, and candidate for a combination of sequences in the present embodiment. In the example of FIG. 13, $S_{LP} = 2$ and $K_{LP} = 2$. Further, $N_{LP} = 1$ in the example of FIG. 13.

As illustrated in FIG. 13, the sequence pool prepared for terminal 200 may be divided into

$$[30]$$

$$2^{N_{HP}}$$

subsets, which is the number of candidate values that UCI bits of $N_{HP}$ bits of a high priority can take. For example, a plurality of subsets may be associated with each candidate for the value of UCI of a high priority.

Further, as illustrated in FIG. 13, each subset may include $S_{LP} = 2$ sequences. In each subset,

$$[31]$$

$$2^{N_{LP}}$$

combinations of sequences including $K_{LP}$ sequences may be prepared from $S_{LP}$ sequences. For example, a plurality of combinations of sequences may be associated with each candidate for the value of an $N_{LP}$-bit UCI of a low priority. For example, two (e.g., $2^1$) combination of sequences may be included for a one-bit UCI, and four (e.g., $2^2$) combinations of sequences may be included for a two-bit UCI. In the same manner as for UCI having a different number of bits, a subset of combinations of sequences may be configured.

For example, in FIG. 13, terminal 200 selects, according to the UCI bit value of $N_{HP}$ bits of a high priority, one of a plurality of subsets included in a sequence pool. Further, in FIG. 13, terminal 200 may select a combination of sequences according to the UCI bit value (for example, 0 or 1) of $N_{LP} = 1$ bit of a low priority, by using $S_{LP} = 2$ sequences (for example, sequences #n and #m) included in the selected subset. In the example illustrated in FIG. 13, when the UCI bit value of a low priority is '0', the combination of sequences in the order of sequences #n and #m may be selected, and when the UCI bit value of a low priority is '1', the combination of sequences in the order of sequences #m and #n may be selected.

Then, terminal 200 maps the sequences included in the selected combination of sequences to a PUCCH resource and transmits the sequences. In the example illustrated in FIG. 13, in a case where the UCI bit value of a low priority is '0', terminal 200 maps sequences #n and #m to each symbol in the PUCCH resource in the order of sequences #n and #m.

As described above, according to the present embodiment, terminal 200 can transmit information on a UCI bit value of a high priority by a subset included in a sequence pool. Further, terminal 200 can transmit information on a UCI bit value of a low priority by a combination of sequences selected from sequences included in a subset.

Further, base station 100 can, for example, demodulate a PUCCH, determine which combination of sequences has been transmitted, and identify a UCI bit value of a low priority based on the combination of sequences. Further, base station 100 can identify a UCI bit value of a high priority by identifying a subset to which the identified combination of sequences belongs.

As described above, in the present embodiment, in a PUCCH transmission without using a DMRS, terminal 200 determines at least one sequence or at least one combination from a plurality of sequences or a plurality of combinations of sequences according to a UCI bit value, and multiplexes information bits of different priorities in an uplink resource and transmits the information bits, by using the determined at least one sequence or the determined at least one combination. Further, base station 100 receives a PUCCH signal, and identifies, based on an association of a UCI bit value with a sequence or a combination of sequences in a PUCCH transmission without a DMRS, each value of UCI bits of different priorities included in the PUCCH signal.

In the present embodiment, for example, subset selection is applied to UCI of a high priority, and selection of a combination of sequences is applied to UCI of a low priority.

Thus, terminal 200 can transmit UCI of a high priority over a PUCCH resource in its entirety. Further, base station 100 is capable of demodulating UCI of a high priority by identifying only a subset. For this reason, it is possible to enhance the reliability of reception processing (for example, demodulation) for UCI of a high priority. Thus, according to the present embodiment, the reception performance of an uplink transmission can be improved.

The embodiments according to a non-limiting example of the present disclosure have been each described, thus far.

(Other Embodiments)

(1) For example, Repetition in which a PUCCH is transmitted over a plurality of slots may be applied in order to improve the PUCCH coverage.

As a Repetition application method for the PUCCH transmission method without using a DMRS described above, a method of simply repeatedly transmitting a PUCCH (for example, a signal for one slot) without using a DMRS, which is generated by the method described above, over a plurality of slots is conceivable, for example.

Further, as a Repetition method, for example, Repetition in a slot-based or a mini-slot-based (for example, non-contiguous symbol Repetition) adopted in NR may be applied, or Repetition in a symbol unit in which the same OFDM symbol is continuously transmitted may be applied. The former is expected to improve the accuracy of residual frequency offset estimation from the fact that the same symbol is transmitted as a non-contiguous symbol. Further, the reception SNR can be improved in the latter since it is easy to in-phase combine symbols to be continuously transmitted with each other.

Further, since a PUCCH resource (for example, the number of symbols) in the time domain increases by Repetition, the number of symbols or the number of resource elements included in a PUCCH resource in the embodiments described above may be replaced with the number of symbols or the number of resource elements in a PUCCH resource including Repetition (for example, for a plurality of slots).

Further, for example, in <Step 1-1> according to Embodiment 1, an orthogonal sequence pool including $N_O = N_{subcarrier} \times N_{symb} \times N_{Rep}$ sequences may be generated. Here, $N_{subcarrier}$ represents the number of subcarriers per one symbol assigned to a PUCCH resource, $N_{symb}$ represents the number of symbols assigned to a PUCCH resource, and $N_{Rep}$ represents the number of Repetitions.

For example, $N_{subcarrier}$ cyclic shift sequences can be generated for a sequence of sequence length $N_{subcarrier}$, and $No = N_{subcarrier} \times N_{symb} \times N_{Rep}$ orthogonal sequences can be generated by performing code spreading with an OCC according to number $N_{symb}$ of symbols and number $N_{Rep}$ of Repetitions.

(2) The sequence in the non-limiting embodiment of the present disclosure may not be a sequence that is actually transmitted, and may be, for example, a logical sequence.

For example, the mapping between a sequence that is actually transmitted and a logical sequence may be the same or different between terminals 200. For example, an association of sequence number n, which is logical, with sequence number m, which is actually transmitted, may be determined based on a parameter configured in a higher layer such as RRC, or may be determined based on a terminal ID or a cell ID.

(3) For example, it is assumed that the minimum value of the number of UCI bits supported in a PUCCH transmission without using a DMRS is "$N_{min}$", and that the maximum value of the number of UCI bits supported in a PUCCH transmission without using a DMRS is "$N_{max}$".

For example, $N_{min}$ may be one bit, three bits which is the minimum number of UCI bits supported by PUCCH format 3, or another value other than one bit and three bits.

Further, for example, $N_{max}$ may be 11 bits which are the maximum number of UCI bits supported with a Reed Muller code in an existing PUCCH format, or may be another value other than 11 bits.

For example, in Embodiment 1 described above, the number of sequences or the number of candidates for a combination of sequences, which is generated for each priority of N bits (N is, for example, $N_{HP}$ or $N_{LP}$), may be replaced with the following value instead of $2^N$.

$$[32]$$

$$\sum_{n=N_{min}}^{N_{max}} 2^n$$

Terminal 200 selects, for example, for each priority, from

$$[33]$$

$$\sum_{n=N_{min}}^{N_{max}} 2^n$$

candidates for a combination of sequences, one sequence or one combination of sequences according to the generated number of UCI bits and the UCI bit value. Further, terminal 200 may map a sequence(s) included in the selected sequence or the selected combination of sequences to a PUCCH resource and transmit the sequence(s), for example.

A sequence pool or a candidate for a combination of sequences is divided into, for example, subsets corresponding to each number of UCI bits (for example, $N_{min}$ bits to $N_{max}$ bits). For example, a sequence pool or a candidate for a combination of sequences may include a plurality of subsets each of which is associated with a candidate for the number of UCI bits. Further, each of a plurality of subsets may include, for example, sequences or candidates for a combination of sequences, each of which is associated with a candidate for UCI bits of N bits (for example, $2^N$ values).

When terminal 200 transmits an N-bit UCI, for example, terminal 200 may select a subset corresponding to the N-bit UCI, and further may select one sequence or one combination of sequences from $2^N$ sequences or candidates for a combination of sequences included in the subset according to the UCI bit value.

As described above, terminal 200 can transmit UCI bit information by a sequence or a candidate for a combination of sequences which is selected from a pool. Further, terminal 200 can transmit information on the number of UCI bits by a subset to which a sequence to be transmitted or a candidate for a combination of sequences to be transmitted belongs. Further, base station 100 can, for example, demodulate a PUCCH, determine based on which sequence or candidate for a combination of sequences UCI has been transmitted, and identify a subset to which the sequence or the candidate for the combination of sequences belongs, thereby identifying the number of UCI bits that terminal 200 has transmitted.

Thus, for example, even in a case where terminal 200 fails in DCI decoding, base station 100 can identify, in addition to the UCI bits transmitted by terminal 200, the number of UCI bits accurately, based on the received sequence of UCI, and thus, the discrepancy in the number of UCI bits between base station 100 and terminal 200 can be suppressed.

Note that, the above-described association of a subset with the number of UCI bits may be applied to either of UCI of a high priority and UCI of a low priority, or may be applied to both UCI of a high priority and UCI of a low priority.

(4) In a method (for example, Method 2) for using an orthogonal sequence(s) and a non-orthogonal sequence(s) according to Embodiment 1, frequency resource selection may be introduced in addition to sequence selection corresponding to UCI.

For example, as a PUCCH transmission method without using a DMRS, individual sequence selection may be applied individually to UCI of priorities as follows.

\<Step 1\>

As the number of sequences included in a sequence pool used for sequence selection, $2^N$ (or, $2^N$ or more) sequences are prepared. Note that, N may be, for example, $N_{HP}$ or $N_{LP}$.

**<Step 1-1>**

Terminal 200 generates an orthogonal sequence pool including, for example, $N_O = N_{subcarrier} \times N_{symb}$ sequences. Here, $N_{subcarrier}$ indicates the number of subcarriers per one symbol assigned to a PUCCH resource, and $N_{symb}$ indicates the number of symbols assigned to a PUCCH resource. Note that, $N_{symb}$ may be, for example, $N_{symb}^{HP}$ or $N_{symb}^{LP}$. For example, $N_{subcarrier}$ cyclic shift sequences can be generated for a sequence of sequence length $N_{subcarrier}$, and further, $No = N_{subcarrier} \times N_{symb}$ orthogonal sequences can be generated by performing code spreading with an OCC according to the number $N_{symb}$ of symbols.

**<Step 1-2>**

In a case where number $N_O$ of orthogonal sequences is smaller than $2^N$, for example, resource block selection may be applied.

In the resource block selection, for example, M resource blocks are reserved as a frequency domain resource for a PUCCH, and terminal 200 selects one resource block from the M resource blocks. For example, in a case where M resource blocks are reserved, $N'_O = N_{subcarrier} \times N_{symb} \times M$ combinations of orthogonal sequences and resource block selections can be realized. For example, $2^N$ candidates for combinations may be generated by combining orthogonal sequences and resource block selections.

**<Step 2>**

Terminal 200 selects one (for example, one sequence and one resource block) from $2^N$ candidates for combinations of orthogonal sequences and resource block selections according to, for example, the number of UCI bits to be generated and the UCI bit value.

**<Step 3>**

Terminal 200, for example, maps the selected sequence to the selected resource block in the PUCCH resource.

For example, base station 100 may demodulate a PUCCH and identify a UCI bit(s) based on a combination of a sequence used for the UCI transmission and a resource block used for the sequence transmission.

According to this method, it is possible to avoid the use of a non-orthogonal sequence while maintaining narrowband transmission of one resource block, and thus, an improvement in the PUCCH coverage performance can be expected.

(5) In a method (for example, Method 2) using an orthogonal sequence(s) and a non-orthogonal sequence(s) according to Embodiment 1, frequency resource selection may be introduced in addition to sequence selection corresponding to UCI.

For example, as a PUCCH transmission method without using a DMRS, sequence selection may be applied individually to UCI of priorities as follows.

**<Step 1>**

As the number of sequences included in a sequence pool used for sequence selection, $2^N$ (or $2^N$ or more) sequences are prepared. Note that, N may be, for example, $N_{HP}$ or $N_{LP}$.

**<Step 1-1>**

Terminal 200 generates an orthogonal sequence pool including, for example, $N_O = N_{subcarrier} \times N_{symb}$ sequences. Here, $N_{subcarrier}$ indicates the number of subcarriers per one symbol assigned to a PUCCH resource, and $N_{symb}$ indicates the number of symbols assigned to a PUCCH resource. Note that, $N_{symb}$ may be, for example, $N_{symb}^{HP}$ or $N_{symb}^{LP}$.

For example, $N_{subcarrier}$ cyclic shift sequences can be generated for a sequence of sequence length $N_{subcarrier}$, and further, $No = N_{subcarrier} \times N_{symb}$ orthogonal sequences can be generated by performing code spreading with an OCC according to the number $N_{symb}$ of symbols.

**<Step 1-2>**

In a case where number $N_O$ of orthogonal sequences is smaller than $2^N$, for example, comb-index selection may be applied.

In the comb-index selection, for example, K resource blocks are reserved as a frequency domain resource for a PUCCH, and terminal 200 selects a comb-shaped subcarrier (for example, comb-index) in each resource block. For example, each resource block may be divided into K combs. For example, when one resource block is configured with 12 subcarriers, comb-index #n (n = 0 to K - 1) may be configured with subcarriers #n, #n + K, to #n + (12/K - 1)K.

For example, in a case where K resource blocks are reserved and a resource block is divided into K combs, $N'_O = N_{subcarrier} \times N_{symb} \times K$ combinations of orthogonal sequences and comb-index selections can be realized. For example, $N'_O \geq 2^N$ candidates for combinations may be generated by combining orthogonal sequences and comb-index selections.

<Step 2>

Terminal 200 selects one (for example, one sequence and one comb-index) from $2^N$ candidates for combinations of orthogonal sequences and comb-index selections, for example, according to the number of UCI bits to be generated and the UCI bit value.

<Step 3>

Terminal 200, for example, maps the selected sequence to a subcarrier corresponding to the comb-index selected in Step 2 in a PUCCH resource, and transmits the selected sentence.

For example, base station 100 may demodulate a PUCCH and identify a UCI bit(s) based on a combination of a sequence used for the UCI transmission and a comb (subcarrier) used for the sequence transmission.

According to this method, the number of subcarriers for transmitting a signal is subcarriers for one resource block (for example, 12 subcarriers), and thus, it is possible to avoid the use of a non-orthogonal sequence while maintaining the same power spectrum density (PSD) as that in narrowband transmission, and thus, an improvement in PUCCH coverage performance can be expected.

Further, in comparison with the other embodiment (4), a signal is assigned over the entire resource block allocated to a PUCCH resource, and thus, there is an advantage that interference control between cells becomes relatively simple.

The other embodiments have been described, thus far.

Note that, in the embodiments described above, as a method for dividing a PUCCH resource into subresources corresponding to UCI of different priorities, respectively, a method in which a PUCCH resource is divided into subresources in resource (for example, symbol) units in the time domain (for example, divided into a first half symbol group and a second half symbol group) has been described. The division of a PUCCH resource is, however, not limited to this. For example, different frequency resources (for example, resource blocks or subcarriers) in the same symbol may be allocated to UCI of different priorities, respectively. Alternatively, for example, a method in which a PUCCH resource is divided in resource (for example, resource block or subcarrier) units in the frequency domain (e.g., the high-frequency side and the low-frequency side) is also possible.

Further, a case where UCI bits of different priorities are multiplexed in the same PUCCH resource and transmitted has been described in the embodiments described above, but the priorities of UCI bits that is multiplexed in the same PUCCH resource are not necessarily different from each other, and may be the same. Even in this case, terminal 200 may apply sequence selection or selection of a combination of sequences individually to a plurality of UCI bits. UCI multiplexing with the same priority may be, for example, multiplexing of an ACK/NAC and CSI, multiplexing of an ACK/NACK and an SR, or multiplexing of CSI and an SR, or may be other combinations.

Further, a case where two types of UCI are multiplexed in the same PUCCH resource and transmitted has been described in the embodiments described above, but the number of UCI to be multiplexed and transmitted is not limited to two, and may be three or more. At that time, the priorities of UCI may be different from each other, and may be different in part.

Further, UCI multiplexing transmission in a PUCCH has been described in the embodiments described above, but the channel used for the multiplexing transmission is not limited to PUCCH, and may be other channels. Further, the type of information to be transmitted is not limited to UCI, but may be information of other types (e.g., uplink data signal). Further, an exemplary embodiment of the present disclosure is not limited to the uplink transmission, but may be applied to downlink transmission or sidelink transmission.

Further, the parameters such as the number of subcarriers, the number of resource blocks, the number of symbols, the number of orthogonal sequences, the number of non-orthogonal sequences, and the number of UCI bits supported in a PUCCH transmission, which have been exemplified in the present disclosure, are merely examples, and may be other values.

Further, in the present disclosure, Repetition may also be referred to as, for example, slot aggregation, slot bundling, TTI aggregation, or TTI bundling.

The present disclosure may be applied to, for example, communication between terminals, such as a sidelink communication.

Further, in the present disclosure, a downlink control channel, a downlink data channel, an uplink control channel, and an uplink data channel are not limited to PDCCH, PDSCH, PUCCH, and PUSCH, respectively, and may be control channels having other names.

Further, in the present disclosure, the RRC signaling is assumed for the higher layer signaling, but the signaling may be replaced with Medium Access Control (MAC) signaling and indication by a DCI that is physical layer signaling.

(Complement)

Information indicating whether terminal 200 supports the functions, operations, or pieces of processing that have been indicated in the above-mentioned embodiments and complements may be transmitted (or indicated) from terminal 200 to base station 100, as capability information or a capability parameter for terminal 200, for example.

The capability information may include information elements (IEs) that individually indicate whether terminal 200 supports at least one of the functions, operations, or pieces of processing that have been described in the above-mentioned embodiments, variations, and complements. Alternatively, the capability information may include information elements that indicate whether terminal 200 supports a combination of any two or more of the functions, operations, or pieces of processing that have been described in the above-mentioned embodiments, variations, and complements.

Base station 100 may determine (or decide or assume), for example, based on the capability information received from terminal 200, the functions, operations, or processes that are supported (or not supported) by terminal 200, which is a transmission source of the capability information. Base station 100 may execute operations, processes, or control in accordance with a determination result based on the capability information. For example, base station 100 may control uplink-related processing based on the capability information received from terminal 200.

Note that in a case where terminal 200 does not entirely support the functions, operations, or pieces of processing described in the above-mentioned embodiments, variations, and complements, such an unsupported part of the functions, operations, or processes may be interpreted as a limitation in terminal 200. For example, information or a request relating to such limitation may be indicated to base station 100.

The information on the capability or the limitation of terminal 200 may be defined by standards or may be implicitly indicated to base station 100 in association with information known in base station 100 or information to be transmitted to base station 100, for example.

The embodiments, the variations, and the complements according to a non-limiting and exemplary embodiment of the present disclosure have been each described, thus far.

(Control Signals)

In the present disclosure, the downlink control signal (information) related to the present disclosure may be a signal (information) transmitted through PDCCH of the physical layer or may be a signal (information) transmitted through a MAC Control Element (CE) of the higher layer or the RRC. The downlink control signal may be a pre-defined signal (information).

The uplink control signal (information) related to the present disclosure may be a signal (information) transmitted through PUCCH of the physical layer or may be a signal (information) transmitted through a MAC CE of the higher layer or the RRC. Further, the uplink control signal may be a pre-defined signal (information). The uplink control signal may be replaced with uplink control information (UCI), the 1st stage sidelink control information (SCI) or the 2nd stage SCI.

(Base Station)

In the present disclosure, the base station may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in side link communication, the base station may be replaced with a terminal. The base station may be a relay apparatus that relays communication between a higher node and a terminal. The base station may be a roadside unit as well.

(Uplink/Downlink/Sidelink)

The present disclosure may be applied to any of uplink, downlink and sidelink. The present disclosure may be applied to, for example, uplink channels, such as PUSCH, PUCCH, and PRACH, downlink channels, such as PDSCH, PDCCH, and PBCH, and side link channels, such as Physical Sidelink Shared Channel (PSSCH), Physical Sidelink Control Channel (PSCCH), and Physical Sidelink Broadcast Channel (PSBCH).

PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

(Data Channels/Control Channels)

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSBCH.

(Reference Signals)

In the present disclosure, the reference signals are signals known to both a base station and a mobile station and each reference signal may be referred to as a Reference Signal (RS) or sometimes a pilot signal. The reference signal may be any of a DMRS, a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS).

(Time Intervals)

In the present disclosure, time resource units are not limited to one or a combination of slots and symbols, and may be time resource units, such as frames, superframes, subframes, slots, time slots, subslots, minislots, or time resource units, such as symbols, Orthogonal Frequency Division Multiplexing (OFDM) symbols, Single Carrier-Frequency Division Multiple Access (SC-FDMA) symbols, or other time resource units. The number of symbols included in one slot is not limited to any number of symbols exemplified in the embodiment(s) described above, and may be other numbers of symbols.

(Frequency Bands)

The present disclosure may be applied to any of a licensed band and an unlicensed band.

(Communication)

The present disclosure may be applied to any of communication between a base station and a terminal (Uu-link communication), communication between a terminal and a terminal (Sidelink communication), and Vehicle to Everything (V2X) communication. The channels in the present disclosure may be replaced with PSCCH, PSSCH, Physical Sidelink Feedback Channel (PSFCH), PSBCH, PDCCH, PUCCH, PDSCH, PUSCH, and PBCH.
In addition, the present disclosure may be applied to any of a terrestrial network or a network other than a terrestrial network (NTN: Non-Terrestrial Network) using a satellite or a High Altitude Pseudo Satellite (HAPS). In addition, the present disclosure may be applied to a network having a large cell size, and a terrestrial network with a large delay compared with a symbol length or a slot length, such as an ultra-wideband transmission network.

(Antenna Ports)

An antenna port refers to a logical antenna (antenna group) formed of one or more physical antenna(s). That is, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

<5G NR System Architecture and Protocol Stack>

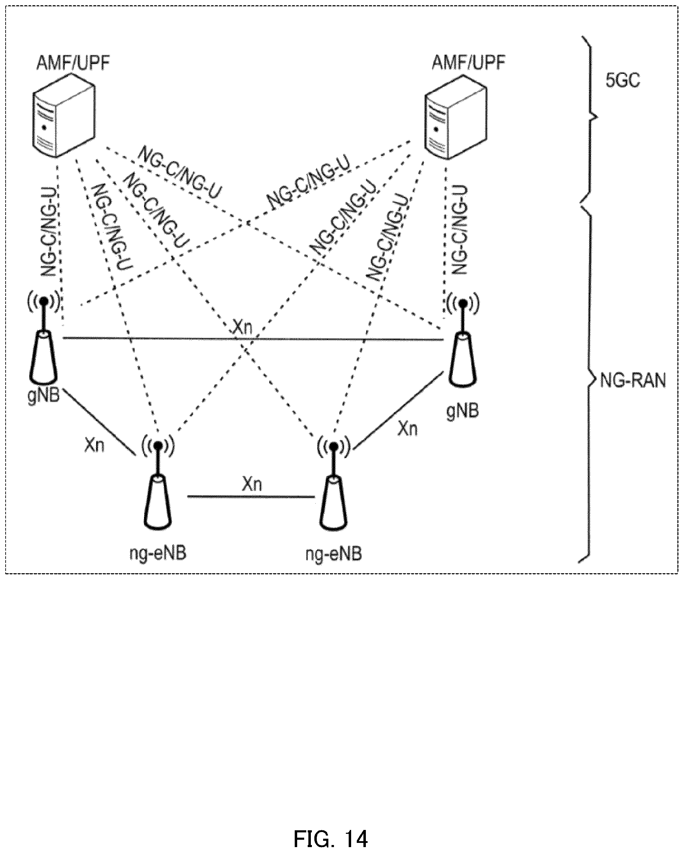

3GPP has been working on the next release for the 5th generation cellular technology (simply called "5G"), including the development of a new radio access technology (NR) operating in frequencies ranging up to 100 GHz. The first version of the 5G standard was completed at the end of 2017, which allows proceeding to 5G NR standard-compliant trials and commercial deployments of terminals (e.g., smartphones).
For example, the overall system architecture assumes an NG-RAN (Next Generation-Radio Access Network) that includes gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g., a particular core entity performing the AMF) by means of the NG-C interface and to the UPF (User Plane Function) (e.g., a particular core entity performing the UPF) by means of the NG-U interface. The NG-RAN architecture is illustrated in FIG. 14 (see e.g., 3GPP TS 38.300 v15.6.0, section 4).

The user plane protocol stack for NR (see e.g., 3GPP TS 38.300, section 4.4.1) includes the PDCP (Packet Data Convergence Protocol, see clause 6.4 of TS 38.300), RLC (Radio Link Control, see clause 6.3 of TS 38.300) and MAC (Medium Access Control, see clause 6.2 of TS 38.300) sublayers, which are terminated in the gNB on the network side. Additionally, a new Access Stratum (AS) sublayer (SDAP, Service Data Adaptation Protocol) is introduced above the PDCP (see e.g., clause 6.5 of 3GPP TS 38.300). A control plane protocol stack is also defined for NR (see for instance TS 38.300, section 4.4.2). An overview of the Layer 2 functions is given in clause 6 of TS 38.300. The functions of the PDCP, RLC, and MAC sublayers are listed respectively in clauses 6.4, 6.3, and 6.2 of TS 38.300. The functions of the RRC layer are listed in clause 7 of TS 38.300.

For instance, the Medium Access Control layer handles logical-channel multiplexing, and scheduling and scheduling-related functions, including handling of different numerologies.

The physical layer (PHY) is for example responsible for coding, PHY HARQ processing, modulation, multi-antenna processing, and mapping of the signal to the appropriate physical time-frequency resources. The physical layer also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. Examples of the physical channel include a Physical Random Access Channel (PRACH), a Physical Uplink Shared Channel (PUSCH), and a Physical Uplink Control Channel (PUCCH) as uplink physical channels, and a Physical Downlink Shared Channel (PDSCH), a Physical Downlink Control Channel (PDCCH), and a Physical Broadcast Channel (PBCH) as downlink physical channels.

Use cases/deployment scenarios for NR could include enhanced mobile broadband (eMBB), ultra-reliable low-latency communications (URLLC), and massive machine type communication (mMTC), which have diverse requirements in terms of data rates, latency, and coverage. For example, eMBB is expected to support peak data rates (20 Gbps for downlink and 10 Gbps for uplink) and user-experienced data rates on the order of three times what is offered by IMT-Advanced. On the other hand, in case of URLLC, the tighter requirements are put on ultra-low latency (0.5 ms for UL and DL each for user plane latency) and high reliability (1-10-5 within 1 ms). Finally, mMTC may preferably require high connection density (1,000,000 devices/km$^2$ in an urban environment), large coverage in harsh environments, and extremely long-life battery for low cost devices (15 years).

Therefore, the OFDM numerology (e.g., subcarrier spacing, OFDM symbol duration, cyclic prefix (CP) duration, and number of symbols per scheduling interval) that is suitable for one use case might not work well for another. For example, low-latency services may preferably require a shorter symbol duration (and thus larger subcarrier spacing) and/or fewer symbols per scheduling interval (aka, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacings of 15 kHz, 30 kHz, and 60 kHz... are being considered at the moment. The symbol duration Tu and the subcarrier spacing Δf are directly related through the formula Δf = 1/Tu. In a similar manner as in LTE systems, the term "resource element" can be used to denote a minimum resource unit being composed of one subcarrier for the length of one OFDM/SC-FDMA symbol.

In the new radio system 5G-NR for each numerology and each carrier, resource grids of subcarriers and OFDM symbols are defined respectively for uplink and downlink. Each element in the resource grids is called a resource element and is identified based on the frequency index in the frequency domain and the symbol position in the time domain (see 3GPP TS 38.211 v15.6.0).

<Functional Split between NG-RAN and 5GC in 5G NR>

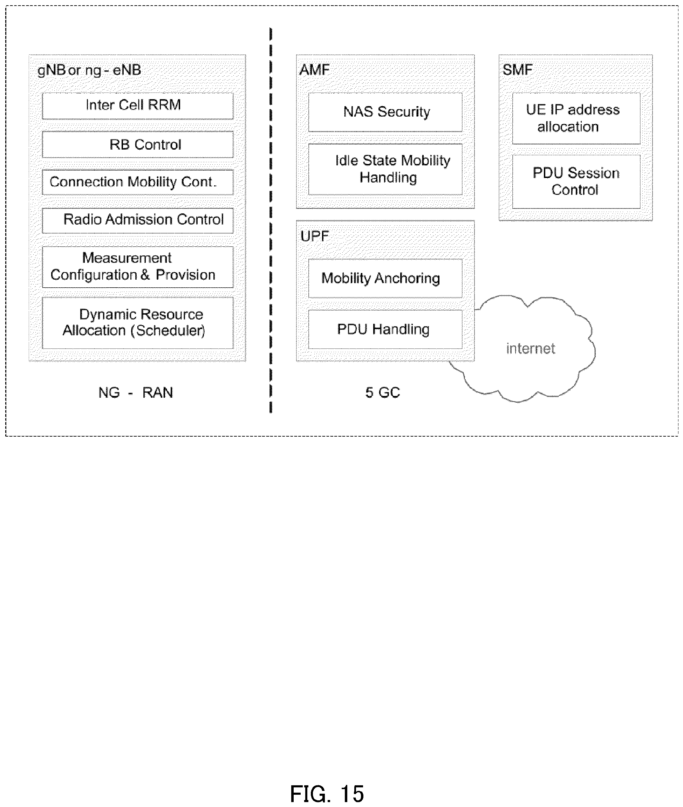

FIG. 15 illustrates the functional split between the NG-RAN and the 5GC. A logical node of the NG-RAN is gNB or ng-eNB. The 5GC includes logical nodes AMF, UPF, and SMF.

For example, gNB and ng-eNB hosts the following main functions:

- Radio Resource Management functions such as Radio Bearer Control, Radio Admission Control, Connection Mobility Control, and dynamic allocation (scheduling) of both uplink and downlink resources to a UE;
- IP header compression, encryption, and integrity protection of data;
- Selection of an AMF during UE attachment in such a case when no routing to an AMF can be determined from the information provided by the UE;

- Routing user plane data towards the UPF;
- Routing control plane information towards the AMF;
- Connection setup and release;
- Scheduling and transmission of paging messages;
- Scheduling and transmission of system broadcast information (originated from the AMF or an operation management maintenance function (OAM: Operation, Admission, Maintenance));
- Measurement and measurement reporting configuration for mobility and scheduling;
- Transport level packet marking in the uplink;
- Session management;
- Support of network slicing;
- QoS flow management and mapping to data radio bearers;
- Support of UEs in the RRC_INACTIVE state;
- Distribution function for NAS messages;
- Radio access network sharing;
- Dual connectivity; and
- Tight interworking between NR and E-UTRA.

The Access and Mobility Management Function (AMF) hosts the following main functions:

- Function of Non-Access Stratum (NAS) signaling termination;
- NAS signaling security;
- Access Stratum (AS) security control;
- Inter-Core Network (CN) node signaling for mobility between 3GPP access networks;
- Idle mode UE reachability (including control and execution of paging retransmission);
- Registration area management;
- Support of intra-system and inter-system mobility;
- Access authentication;
- Access authorization including check of roaming rights;
- Mobility management control (subscription and policies);
- Support of network slicing; and
- Session Management Function (SMF) selection.

In addition, the User Plane Function (UPF) hosts the following main functions:

- Anchor Point for intra-/inter-RAT mobility (when applicable);
- External Protocol Data Unit (PDU) session point for interconnection to a data network;
- Packet routing and forwarding;
- Packet inspection and a user plane part of Policy rule enforcement;
- Traffic usage reporting;
- Uplink classifier to support routing traffic flows to a data network;
- Branching point to support multi-homed PDU session;
- QoS handling for user plane (e.g., packet filtering, gating, UL/DL rate enforcement);
- Uplink traffic verification (SDF to QoS flow mapping); and
- Function of downlink packet buffering and downlink data notification triggering.

Finally, the Session Management Function (SMF) hosts the following main functions:

- Session management;
- UE IP address allocation and management;
- Selection and control of UPF;
- Configuration function for traffic steering at the User Plane Function (UPF) to route traffic to a proper destination;
- Control part of policy enforcement and QoS; and
- Downlink data notification.

<RRC Connection Setup and Reconfiguration Procedure>

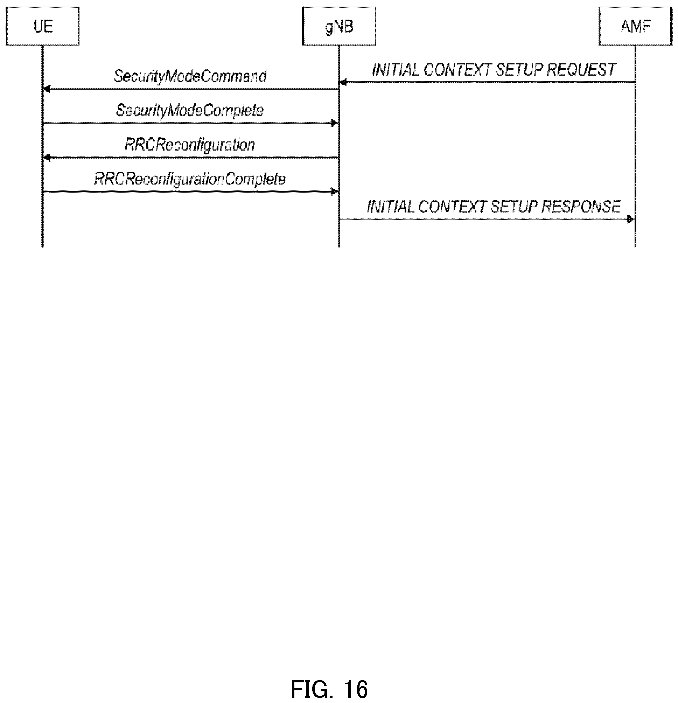

FIG. 16 illustrates some interactions between a UE, gNB, and AMF (a 5GC Entity) performed in the context of a transition of the UE from RRC_IDLE to RRC_CONNECTED for the NAS part (see TS 38 300 v15.6.0).

The RRC is higher layer signaling (protocol) used to configure the UE and gNB. With this transition, the AMF prepares UE context data (which includes, for example, a PDU session context, security key, UE Radio Capability, UE Security Capabilities, and the like) and sends it to the gNB with an INITIAL CONTEXT SETUP REQUEST. Then, the gNB activates the AS security with the UE. This activation is performed by the gNB transmitting to the UE a SecurityMode-Command message and by the UE responding to the gNB with the SecurityModeComplete message. Afterwards, the gNB performs the reconfiguration to setup the Signaling Radio Bearer 2 (SRB2) and Data Radio Bearer(s) (DRB(s)) by means of transmitting to the UE the RRCReconfiguration message and, in response, receiving by the gNB the RRCReconfigurationComplete from the UE. For a signaling-only connection, the steps relating to the RRCReconfiguration are skipped since SRB2 and DRBs are not set up. Finally, the gNB indicates the AMF that the setup procedure is completed with INITIAL CONTEXT SETUP RESPONSE.

Thus, the present disclosure provides a 5th Generation Core (5GC) entity (e.g., AMF, SMF, or the like) including control circuitry, which, in operation, establishes a Next Generation (NG) connection with a gNodeB, and a transmitter, which in operation, transmits an initial context setup message to the gNodeB via the NG connection such that a signaling radio bearer between the gNodeB and a User Equipment (UE) is set up. Specifically, the gNodeB transmits Radio Resource Control (RRC) signaling including a resource allocation configuration Information Element (IE) to the UE via the signaling radio bearer. Then, the UE performs an uplink transmission or a downlink reception based on the resource allocation configuration.

<Usage Scenarios of IMT for 2020 and beyond>

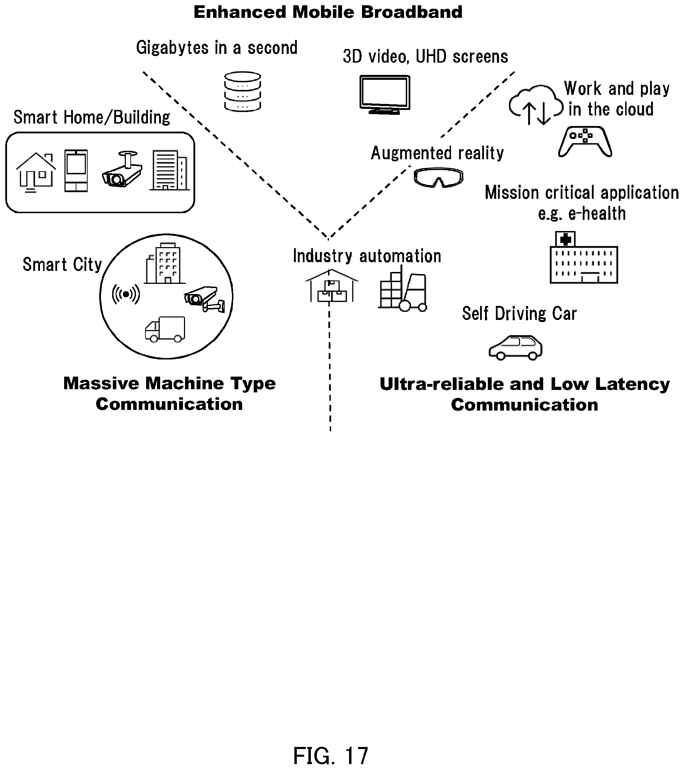

FIG. 17 illustrates some of the use cases for 5G NR. In 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. In addition to further extending the eMBB support, the current and future work would involve the standardization for ultra-reliable and low-latency communications (URLLC) and massive machine-type communications (mMTC). FIG. 17 illustrates some examples of envisioned usage scenarios for IMT for 2020 and beyond (see e.g., ITU-R M.2083 FIG. 2).

The URLLC use case has stringent requirements for capabilities such as throughput, latency and availability. The URLLC use case has been envisioned as one of the enablers for future vertical applications such as wireless control of industrial manufacturing or production processes, remote medical surgery, distribution automation in a smart grid, transportation safety. Ultra-reliability for URLLC is to be supported by identifying the techniques to meet the requirements set by TR 38.913. For NR URLLC in Release 15, key requirements include a target user plane latency of 0.5 ms for UL (uplink) and 0.5 ms for DL (downlink). The general URLLC requirement for one transmission of a packet is a block error rate (BLER) of 1E-5 for a packet size of 32 bytes with a user plane latency of 1 ms.

From the physical layer perspective, reliability can be improved in a number of possible ways. The current scope for improving the reliability involves defining separate CQI tables for URLLC, more compact DCI formats, repetition of PDCCH, or the like. However, the scope may widen for achieving ultra-reliability as the NR becomes more stable and developed (for NR URLLC key requirements). Particular use cases of NR URLLC in Rel. 15 include Augmented Reality/Virtual Reality (AR/VR), e-health, e-safety, and mission-critical applications.

Moreover, technology enhancements targeted by NR URLLC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. Pre-emption means that a transmission for which resources have already been allocated is stopped, and the already allocated resources are used for another transmission that has been requested later, but has lower latency/higher priority requirements. Accordingly, the already granted transmission is pre-empted by a later transmission. Pre-emption is applicable independent of the particular service type. For example, a transmission for a service-type A (URLLC) may be pre-empted by a transmission for a service type B (such as eMBB). Technology enhancements with respect to reliability improvement include dedicated CQI/MCS tables for the target BLER of 1E-5.

The use case of mMTC (massive machine type communication) is characterized by a very large number of connected devices typically transmitting a relatively low volume of non-delay sensitive data. Devices are required to be low cost and to have a very long battery life. From NR perspective, utilizing very narrow bandwidth parts is one possible solution to have power saving from UE perspective and enable long battery life.

As mentioned above, it is expected that the scope of reliability in NR becomes wider. One key requirement to all the cases, for example, for URLLC and mMTC, is high reliability or ultra-reliability. Several mechanisms can improve the reliability from radio perspective and network perspective. In general, there are a few key potential areas that can help improve the reliability. Among these areas are compact control channel information, data/control channel repetition, and diversity with respect to frequency, time and/or the spatial domain. These areas are applicable to reliability improvement in general, regardless of particular communication scenarios.

For NR URLLC, further use cases with tighter requirements have been envisioned such as factory automation, transport industry and electrical power distribution. The tighter requirements are higher reliability (up to 10-6 level), higher availability, packet sizes of up to 256 bytes, time synchronization up to the extent of a few μs (where the value can be one or a few μs depending on frequency range and short latency on the order of 0.5 to 1 ms (in particular a target user plane latency of 0.5 ms), depending on the use cases).

Moreover, for NR URLLC, several technology enhancements from physical layer perspective have been identified. Among these are PDCCH (Physical Downlink Control Channel) enhancements related to compact DCI, PDCCH repetition, increased PDCCH monitoring. Moreover, UCI (Uplink Control Information) enhancements are related to enhanced HARQ (Hybrid Automatic Repeat Request) and CSI feedback enhancements. Also PUSCH enhancements related to mini-slot level hopping and retransmission/repetition enhancements are possible. The term "mini-slot" refers to a Transmission Time Interval (TTI) including a smaller number of symbols than a slot (a slot comprising fourteen symbols).

<QoS Control>

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU sessions. For each UE, the NG-RAN establishes at least one Data Radio Bearer (DRB) together with the PDU session, e.g., as illustrated above with reference to FIG. 16. Further, additional DRB(s) for QoS flow(s) of that PDU session can be subsequently configured (it is up to NG-RAN when to do so). The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

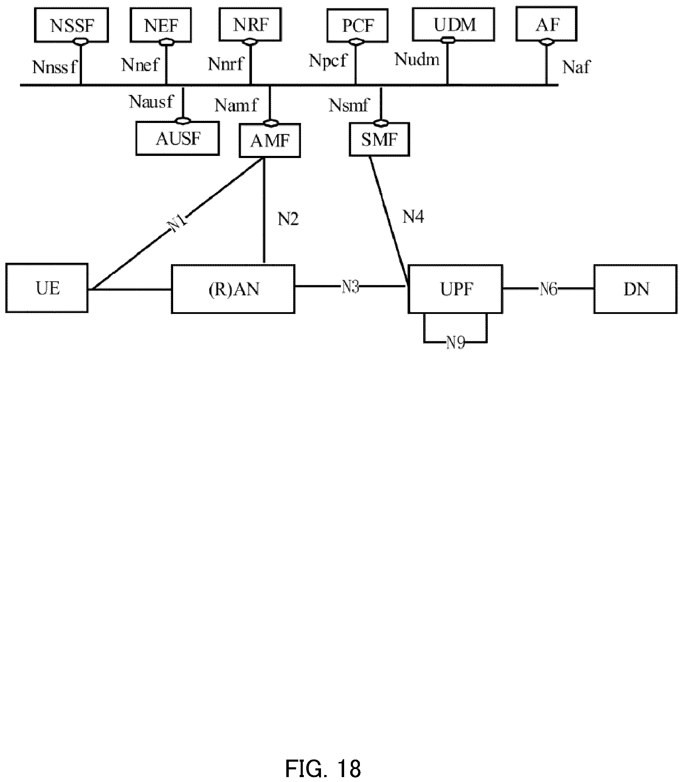

FIG. 18 illustrates a 5G NR non-roaming reference architecture (see TS 23.501 v16.1.0, section 4.23). An Application Function (AF) (e.g., an external application server hosting 5G services, exemplarily described in FIG. 17) interacts with the 3GPP Core Network in order to provide services, for example to support application influencing on traffic routing, accessing Network Exposure Function (NEF) or interacting with the policy framework for policy control (e.g., QoS control) (see Policy Control Function, PCF). Based on operator deployment, Application Functions considered to be trusted by the operator can be allowed to interact directly with relevant Network Functions. Application Functions not allowed by the operator to access directly the Network Functions use the external exposure framework via the NEF to interact with relevant Network Functions.

FIG. 18 illustrates further functional units of the 5G architecture, namely Network Slice Selection Function (NSSF), Network Repository Function (NRF), Unified Data Management (UDM), Authentication Server Function (AUSF), Access and Mobility Management Function (AMF), Session Management Function (SMF), and Data Network (DN, e.g., operator services, Internet access, or third party services). All of or a part of the core network functions and the application services may be deployed and running on cloud computing environments.

In the present disclosure, thus, an application server (e.g., AF of the 5G architecture), is provided that includes: a transmitter, which in operation, transmits a request containing a QoS requirement for at least one of URLLC, eMMB and mMTC services to at least one of functions (such as NEF, AMF, SMF, PCF, and UPF) of the 5GC to establish a PDU session including a radio bearer between a gNodeB and a UE in accordance with the QoS requirement; and control circuitry, which, in operation, performs the services using the established PDU session.

In the description of the present disclosure, the term ending with a suffix, such as "-er" "-or" or "-ar" may be interchangeably replaced with another term, such as "circuit (circuitry)," "device," "unit," or "module."

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI herein may be referred to as an IC, a system LSI, a super LSI, or an ultra LSI depending on a difference in the degree of integration.

However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing.

If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus. The communication apparatus may comprise a transceiver and processing/control circuitry. The transceiver may comprise and/or function as a receiver and a transmitter. The transceiver, as the transmitter and receiver, may include an RF (radio frequency) module and one or more antennas. The RF module may include an amplifier, an RF modulator/demodulator, or the like. Some non-limiting examples of such a communication apparatus include a phone (e.g., cellular (cell) phone, smartphone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)."

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as, e.g., a base station, an access point, and any other apparatus, device or system that communicates with or controls apparatuses such as those in the above non-limiting examples.

A terminal according to an exemplary embodiment of the present disclosure includes: control circuitry, which, in operation, determines at least one sequence or at least one combination from a plurality of sequences or a plurality of combinations of sequences according to a value of an information bit, in an uplink transmission without using a reference signal; and transmission circuitry, which, in operation, multiplexes information bits of different priorities in an uplink resource and transmits the information bits, by using the at least one sequence or the at least one combination, in the uplink transmission without using the reference signal.

In an exemplary embodiment of the present disclosure, the control circuitry determines one sequence or one combination individually for each of the information bits of the different priorities.

In an exemplary embodiment of the present disclosure, in a case where the transmission circuitry multiplexes the information bits of the different priorities in the uplink resource and transmits the information bits, the transmission circuitry maps the one sequence to the uplink resource and transmits the one sequence, or the transmission circuitry maps the one combination to the uplink resource and transmits the combination, where the one sequence or the one combination is determined individually for each of the information bits of the different priorities.

In an exemplary embodiment of the present disclosure, the control circuitry determines one combination from the plurality of combinations included in a sequence pool, according to a first information bit of a first priority and a second information bit of a second priority lower than the first priority.

In an exemplary embodiment of the present disclosure, the sequence pool includes a plurality of subsets each of which is associated with a candidate for a value of the first information bit, and each of the plurality of subsets includes a combination of sequences each of which is associated with a candidate for a value of the second information bit, and the control circuitry selects one subset from the plurality of subsets according to the value of the first information bit and selects the one combination from the one subset according to the value of the second information bit.

In an exemplary embodiment of the present disclosure, in a case where a number of a plurality of the second information bits is $N_{LP}$ bits, a number of sequences included in the subset is $S_{LP}$, and a number of sequences included in the combination is $K_{LP}$,

$$[34]$$

$$\frac{S_{LP}!}{K_{LP}!(S_{LP}-K_{LP})!} \geq 2^{N_{LP}} \quad \text{or} \quad \frac{S_{LP}!}{(S_{LP}-K_{LP})!} \geq 2^{N_{LP}}$$

is satisfied.

A base station according to an exemplary embodiment of the present disclosure includes: reception circuitry, which, in operation, receives a signal; and control circuitry, which, in operation, identifies, based on an association of a value of an information bit with a sequence or a combination of sequences in an uplink transmission without using a reference signal, each value of information bits of different priorities included in the signal.

A communication method according to an exemplary embodiment of the present disclosure includes: determining, by a terminal, at least one sequence or at least one combination from a plurality of sequences or a plurality of combinations of sequences according to a value of an information bit, in an uplink transmission without using a reference signal; and multiplexing, by the terminal, information bits of different priorities in an uplink resource and transmitting, by the terminal, the information bits, by using the at least one sequence or the at least one combination, in the uplink transmission without using the reference signal.

A communication method according to an exemplary embodiment of the present disclosure includes: receiving, by a base station, a signal; and identifying, by the base station, based on an association of a value of an information bit with a sequence or a combination of sequences in an uplink transmission without using a reference signal, each value of information bits of different priorities included in the signal.

The disclosure of Japanese Patent Application No. 2022-049011, filed on March 24, 2022, including the specification, drawings and abstract, is incorporated herein by reference in its entirety.

Industrial Applicability

An exemplary embodiment of the present disclosure is useful for radio communication systems.

Reference Signs List

100 Base station
101, 205 Controller
102 Higher-layer control signal generator
103 Downlink control information generator
104, 206 Encoder
105, 207 Modulator
106, 208 Signal assigner
107, 209 Transmitter
108, 201 Receiver
109, 202 Extractor
110, 203 Demodulator
111, 204 Decoder
200 Terminal

**Claims**

1. A terminal, comprising:

   control circuitry, which, in operation, determines at least one sequence or at least one combination from a plurality of sequences or a plurality of combinations of sequences according to a value of an information bit, in an uplink transmission without using a reference signal; and
   transmission circuitry, which, in operation, multiplexes information bits of different priorities in an uplink resource and transmits the information bits, by using the at least one sequence or the at least one combination.

2. The terminal according to claim 1, wherein
   the control circuitry determines one sequence or one combination individually for each of the information bits of the different priorities.

3. The terminal according to claim 2, wherein
   in a case where the transmission circuitry multiplexes the information bits of the different priorities in the uplink resource and transmits the information bits, the transmission circuitry maps the one sequence to the uplink resource and transmits the one sequence, or the transmission circuitry maps the one combination to the uplink resource and transmits the combination, the one sequence or the one combination being determined individually for each of the information bits of the different priorities.

4. The terminal according to claim 1, wherein
   the control circuitry determines one combination from the plurality of combinations included in a sequence pool, according to a first information bit of a first priority and a second information bit of a second priority lower than the first priority.

5. The terminal according to claim 4, wherein:

the sequence pool includes a plurality of subsets each of which is associated with a candidate for a value of the first information bit, and each of the plurality of subsets includes a combination of sequences each of which is associated with a candidate for a value of the second information bit, and
the control circuitry selects one subset from the plurality of subsets according to the value of the first information bit and selects the one combination from the one subset according to the value of the second information bit.

6. The terminal according to claim 5, wherein:
in a case where a number of a plurality of the second information bits is $N_{LP}$ bits, a number of sequences included in the subset is $S_{LP}$, and a number of sequences included in the combination is $K_{LP}$,

$$[1]$$

$$\frac{S_{LP}!}{K_{LP}!(S_{LP}-K_{LP})!} \geq 2^{N_{LP}} \quad \text{or} \quad \frac{S_{LP}!}{(S_{LP}-K_{LP})!} \geq 2^{N_{LP}}$$

is satisfied.

7. A base station, comprising:

reception circuitry, which, in operation, receives a signal; and
control circuitry, which, in operation, identifies, based on an association of a value of an information bit with a sequence or a combination of sequences in an uplink transmission without using a reference signal, each value of information bits of different priorities included in the signal.

8. A communication method, comprising:

determining, by a terminal, at least one sequence or at least one combination from a plurality of sequences or a plurality of combinations of sequences according to a value of an information bit, in an uplink transmission without using a reference signal; and
multiplexing, by the terminal, information bits of different priorities in an uplink resource and transmitting, by the terminal, the information bits, by using the at least one sequence or the at least one combination.

9. A communication method, comprising:

receiving, by a base station, a signal; and
identifying, by the base station, based on an association of a value of an information bit with a sequence or a combination of sequences in an uplink transmission without using a reference signal, each value of information bits of different priorities included in the signal.

|  | PUCCH format 0 | PUCCH format 1 | PUCCH format 2 | PUCCH format 3 | PUCCH format 4 |
|---|---|---|---|---|---|
| Use case | Short PUCCH HARQ/SR 1 - 2 bits | Long PUCCH HARQ/SR 1 - 2 bits | Short PUCCH Any UCI >2 bits | Long PUCCH Any UCI >2 bits | Long PUCCH Any UCI >2 bits |
| Duration | 1-2 symbols | 4-14 symbols | 1-2 symbols | 4-14 symbols | 4-14 symbols |
| Starting symbol | Anywhere unless the PUCCH cross slot boundary | | | | |
| RB size | 1 RB | 1 RB | 1-16 RBs | 1-16 RBs | 1 RB |
| CDM capacity | 6 (1 bit) 3 (2 bits) | 36 (14 symbols with frequency hopping) 84 (14 symbols without frequency hopping) | 1 | 1 | 2 or 4 |
| Multiplexing | Cyclic shift | Cyclic shift + TD-OCC | - | - | FD-OCC |
| Coding scheme | - | - | Reed-Muller (up to 11 bits) Polar (>11 bits) | | |
| Waveform | Singe-carrier | Singe-carrier | CP-OFDM | Singe-carrier | Singe-carrier |

FIG. 1

Sequence pool (N-bit UCI)

$N_{symb}$ OFDM symbols

UCI information
(N bits)

| Sequence #0 |
| Sequence #1 |
| Sequence #2 |
| : |
| Sequence #$2^N$-1 |

Sequence #n

$N_{RB}$ RBs

Map to PUCCH resource

FIG. 2

FIG. 3

Sequence pool (S)

Sequence #0
Sequence #1
Sequence #2
Sequence #3
Sequence #4
Sequence #5

Candidate of sequence combination

Sequence #0
Sequence #1

Sequence #0
Sequence #2

Sequence #0
Sequence #3

⋮

Sequence #5
Sequence #4

UCI information (N bits)

Sequence #n
Sequence #m

$N_{symb}$ OFDM symbols

$N_{RB}$ RBs

Map to PUCCH resource

FIG. 4

EP 4 503 482 A1

DL assignment
for eMBB PDSCH

DL assignment
for URLLC PDSCH

URLLC PDSCH

DL | eMBB PDSCH | | | | | |

**Drop eMBB (LP) PUCCH**

UL | | | | eMBB (LP) PUCCH | |

URLLC (HP) PUCCH

FIG. 5

100

CONTROLLER ◄—— RECEIVER

FIG. 6

200

CONTROLLER ——► TRANSMITTER

FIG. 7

FROM CONTROLLER 101    FROM CONTROLLER 101

DL DATA SIGNAL → | ENCODER (104) | → | MODULATOR (105) | → | SIGNAL ASSIGNER (106) | → | TRANSMITTER (107) |

| HIGHER-LAYER CONTROL SIGNAL GENERATOR (102) |

| CONTROLLER (101) |

| DOWNLINK CONTROL INFORMATION GENERATOR (103) |

UCI ← | DECODER (111) | ← | DEMODULATOR (110) | ← | EXTRACTOR (109) | ← | RECEIVER (108) |

FIG. 8

EP 4 503 482 A1

FIG. 9

Start

→ **S101** ACQUIRE INFORMATION ON SEQUENCE POOL (OR CANDIDATE FOR COMBINATION OF SEQUENCES) AND PUCCH RESOURCE

→ **S102** RECEIVE PDCCH (DCI)

→ **S103** RECEIVE AND DECODE PDSCH

→ **S104** GENERATE UCI (ACK/NACK)

→ **S105** SELECT SEQUENCE OR COMBINATION OF SEQUENCES

→ **S106** MAP SELECTED SEQUENCE(S) TO PUCCH RESOURCE

→ **S107** TRANSMIT UCI WITH PUCCH

→ End

FIG. 10

Sequence pool (N_HP-bit UCI)

HP UCI information (N_HP bits)

Sequence #0
Sequence #1
Sequence #2
$\vdots$
Sequence #$2^{N\_HP}-1$

Sequence #n

N_symb OFDM symbols

N_RB RBs

Sequence pool (N_LP-bit UCI)

LP UCI information (N_LP bits)

Sequence #0
Sequence #1
Sequence #2
$\vdots$
Sequence #$2^{N\_LP}-1$

Sequence #m

Map to PUCCH resource

FIG. 11

## Sequence pool ($S_{HP}$)

| Sequence #0 |
| Sequence #1 |
| Sequence #2 |
| Sequence #3 |
| Sequence #4 |
| Sequence #5 |

## Candidate of sequence combination

| Sequence #0 |
| Sequence #1 |

| Sequence #0 |
| Sequence #2 |

| Sequence #0 |
| Sequence #3 |

⋮

| Sequence #5 |
| Sequence #4 |

UCI information ($N_{HP}$ bits) ⟹

⟹ 

| Sequence #$n_{HP}$ |
| Sequence #$m_{LP}$ |

⟹

$N_{symb}$ OFDM symbols

Map to PUCCH resource

$N_{RB}$ RBs

## Sequence pool ($S_{LP}$)

| Sequence #0 |
| Sequence #1 |
| Sequence #2 |
| Sequence #3 |

## Candidate of sequence combination

| Sequence #0 |
| Sequence #1 |

| Sequence #0 |
| Sequence #2 |

| Sequence #0 |
| Sequence #3 |

⋮

| Sequence #3 |
| Sequence #2 |

UCI information ($N_{LP}$ bits) ⟹

⟹

| Sequence #$n_{LP}$ |
| Sequence #$m_{LP}$ |

⟹

FIG. 12

EP 4 503 482 A1

EP 4 503 482 A1

Sequence pool

Sequence #0
Sequence #1
Subset #0

UCI information ($N_{HP}$ bits)

Sequence 3
Sequence 4
Subset #1

UCI information ($N_{LP}$ bits)

LP UCI: 0 => #n, #m
LP UCI: 1 => #m, #n

Sequence #n
Sequence #m

$N_{symb}$ OFDM symbols

$N_{RB}$ RBs

Map to PUCCH resource

FIG. 13

FIG. 14

gNB or ng - eNB

Inter Cell RRM

RB Control

Connection Mobility Cont.

Radio Admission Control

Measurement
Configuration & Provision

Dynamic Resource
Allocation (Scheduler)

NG - RAN

AMF

NAS Security

Idle State Mobility
Handling

UPF

Mobility Anchoring

PDU Handling

SMF

UE IP address
allocation

PDU Session
Control

internet

5 GC

FIG. 15

FIG. 16

**Enhanced Mobile Broadband**

FIG. 17

FIG. 18

## INTERNATIONAL SEARCH REPORT

| | International application No. |
|---|---|
| | **PCT/JP2022/047558** |

**A. CLASSIFICATION OF SUBJECT MATTER**

*H04J 13/10*(2011.01)i; *H04L 27/26*(2006.01)i; *H04W 72/1268*(2023.01)i
FI: H04J13/10; H04W72/1268; H04L27/26 113

According to International Patent Classification (IPC) or to both national classification and IPC

**B. FIELDS SEARCHED**

Minimum documentation searched (classification system followed by classification symbols)

H04J13/10; H04L27/26; H04W72/1268

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | US 2021/0092734 A1 (QUALCOMM INCORPOTRATED) 25 March 2021 (2021-03-25) paragraphs [0071]-[0074], [0127]-[0129], fig. 3B | 1-4, 7-9 |
| A | | 5-6 |
| Y | WO 2020/066026 A1 (NTT DOCOMO, INC.) 02 April 2020 (2020-04-02) paragraphs [0035], [0072]-[0078], fig. 4 | 1-4, 7-9 |
| A | | 5-6 |
| A | WO 2020/204486 A1 (LG ELECTRONICS INC.) 08 October 2020 (2020-10-08) entire text, all drawings | 1-9 |

☐ Further documents are listed in the continuation of Box C.　　☑ See patent family annex.

| | |
|---|---|
| *　Special categories of cited documents: | "T"　later document published after the international filing date or priority date and not in conflict with the application but cited to understand the principle or theory underlying the invention |
| "A"　document defining the general state of the art which is not considered to be of particular relevance | |
| "E"　earlier application or patent but published on or after the international filing date | "X"　document of particular relevance; the claimed invention cannot be considered novel or cannot be considered to involve an inventive step when the document is taken alone |
| "L"　document which may throw doubts on priority claim(s) or which is cited to establish the publication date of another citation or other special reason (as specified) | "Y"　document of particular relevance; the claimed invention cannot be considered to involve an inventive step when the document is combined with one or more other such documents, such combination being obvious to a person skilled in the art |
| "O"　document referring to an oral disclosure, use, exhibition or other means | |
| "P"　document published prior to the international filing date but later than the priority date claimed | "&"　document member of the same patent family |

| Date of the actual completion of the international search | Date of mailing of the international search report |
|---|---|
| **01 February 2023** | **21 February 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

| | | International application No. |
|---|---|---|
| | | **PCT/JP2022/047558** |

| Patent document cited in search report | Publication date (day/month/year) | Patent family member(s) | Publication date (day/month/year) |
|---|---|---|---|
| US 2021/0092734 A1 | 25 March 2021 | WO 2021/061726 A1 paragraphs [0071]-[0074], [0126]-[0128], fig. 3B CN 114503730 A KR 10-2022-0066062 A | |
| WO 2020/066026 A1 | 02 April 2020 | (Family: none) | |
| WO 2020/204486 A1 | 08 October 2020 | US 2022/0167320 A1 entire text, all drawings KR 10-2021-0124491 A CN 113692769 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022049011 A

**Non-patent literature cited in the description**

- NR Base Station (BS) radio transmission and reception. *3GPP TS38.104 V15.16.0*, December 2021
- **CHINA TELECOM**. New WID on NR coverage enhancements. *RP-202928*, December 2020
- NR Physical channels and modulation (Release 16). *3GPP TS38.211 V16.8.0*, December 2021
- NR Multiplexing and channel coding (Release 16). *3GPP TS38.212 V16.8.0*, December 2021
- NR Physical layer procedures for control (Release 16). *3GPP TS38.213 V16.8.0*, December 2021

- NR Physical layer procedures for data (Release 16). *3GPP TS38.214 V16.8.0*, December 2021
- **HUAWEI** ; **HISILICON**. Potential solutions for PUCCH coverage enhancement. *R1-2007584*, 26 October 2020
- **QUALCOMM INCORPORATED** ; **HUAWEI** ; **HISILICON**. Potential coverage enhancement techniques for PUCCH. *R1-2009315*, 26 October 2020
- **CMCC**. Discussion on the PUCCH coverage enhancement. *R1-2008027*, August 2020
- **ETSI MCC**. Report of RAN1#101-e meeting. *R1-2005201*, November 2020